# EUROPEAN PATENT APPLICATION

(11) **EP 4 628 634 A1**
(43) Date of publication of application: **08.10.2025**
(21) Application number: 24909203.2
(22) Date of filing: 15.11.2024
(51) Int. Cl.: D01F 9/00

(54) **WOODEN HONEYCOMB AND PREPARATION METHOD THEREFOR**

(30) Priority: 06.02.2024 CN 202410171644
(71) Applicant: Freshape SA, 1020 Renens (CH)
(72) Inventor: WANG, Ruonan, Shanghai 201112 (CN); ZHOU, Zuoxin, Shanghai 201112 (CN); JIA, Yunlong, Shanghai 201112 (CN); DUAN, Longjiang, Shanghai 201112 (CN); WU, Haocheng, Shanghai 201112 (CN); LIN, Shihui, Shanghai 201112 (CN); ZHENG, Yunlong, Shanghai 201112 (CN); LIANG, Kai, Shanghai 201112 (CN); SUN, Zhanjun, Shanghai 201112 (CN)
(74) Representative: Ridderbusch, Oliver
(86) International application number: PCT/CN2024/132376
(87) International publication number: WO 2025/167252

(57) **Abstract**

The present invention provides a wood honeycomb, which includes a plain honeycomb and first resin combined with a surface of the plain honeycomb; the plain honeycomb includes a plurality of pieces of wood fiber paper and adhesive; the plurality of pieces of wood fiber paper are bonded by the adhesive; the plurality of pieces of wood fiber paper composite include unidirectional wood fiber paper and/or wood fiber paper composite; and the wood fiber paper composite includes unidirectional wood fiber paper, and a second resin layer and/or a fiber reinforced layer combined with the surface of the unidirectional wood fiber paper. Compared with related technology, the core material wood fiber paper of the wood honeycomb provided by the present invention is a natural environment-friendly material, and the mechanical properties in the direction parallel to wood fibers and the direction vertical to the wood fibers are excellent, so that the obtained wood honeycomb is excellent in mechanical property, light in weight, low in cost and environmentally friendly.

## Description

The present application claims priority to Chinese Patent Application 22024101716440, entitled "WOOD FIBER REINFORCED MATERIAL, AND PREPARATION METHOD AND USE THEREFOR" filed with the Chinese Patent Office on February 6, 2024, which is partially incorporated by reference in the present application.

### TECHNICAL FIELD

The present invention belongs to the technical field of honeycombs, and particularly relates to a wood honeycomb and a preparation method therefor.

### BACKGROUND

Honeycomb is of a structure with a regular hexagonal shape, which is mostly combined with panels to form a sandwich core structure. A honeycomb core material has excellent specific strength and specific modulus, so the rigidity of the overall structure can be greatly improved with little weight. Because the honeycomb structure has good stability, it has a good improvement in seismic resistance, impact resistance, fatigue resistance and so on of the overall structure.

At present, the high-performance honeycomb core material is mainly an aramid honeycomb prepared from aramid paper, and is used in the fields of high-end applications such as rail transit, aerospace, and military industry. The aramid honeycomb core material is prepared from aramid paper, and aramid paper is expensive, resulting in high price of the aramid honeycomb core material prepared by it, which restricts its large-scale application in the low-end civil field, including construction, automobile and consumer markets.

### SUMMARY

In view of this, in order to solve the technical problem, the present invention provides a wood honeycomb which is excellent in mechanical property, light in weight, low in cost and environment-friendly, and a preparation method therefor.

The present invention provides a wood honeycomb, comprising a plain honeycomb and first resin combined with the surface of the plain honeycomb; the plain honeycomb comprises a plurality of pieces of wood fiber paper and adhesive; the plurality of pieces of wood fiber paper are bonded by the adhesive;
the plurality of pieces of wood fiber paper composite comprise unidirectional wood fiber paper and/or wood fiber paper composite; the wood fiber paper composite comprises unidirectional wood fiber paper, and a second resin layer and/or a fiber reinforced layer combined with the surface of the unidirectional wood fiber paper;
the density of the wood honeycomb is 29-144 kg/m³; and
the compressive strength of the wood honeycomb is 0.4-13.8 MPa.

Preferably, the wood fiber paper comprises wood fibers and/or fiber bundles; the wood fibers and/or fiber bundles are integrally arranged or extended in a single direction in a microscopic aspect.

Preferably, the tensile strength of the wood fiber paper in a direction parallel to the wood fibers and/or fiber bundles is 6-30 kN/m;
and/or, the tensile strength of the wood fiber paper in a direction vertical to the wood fibers and/or fiber bundles is 0.3-4 kN/m
and/or, the elasticity modulus of wood fiber paper in the direction parallel to wood fibers and/or fiber bundles is 8-80 GPa;
and/or, the elasticity modulus of the wood fiber paper in the direction vertical to the wood fibers and/or fiber bundles is 0.4-3 GPa.

Preferably, the unidirectional wood fiber paper is prepared by shrinkage of a unidirectional wood veneer with partial substances removed in at least one direction;
the partial substances comprise lignin and hemicellulose; and
the shrinkage comprises transverse shrinkage and thickness shrinkage according to force decomposition.

Preferably, the unidirectional veneer with partial substances removed is subjected to shrinkage in at least two directions;
the shrinkage comprises transverse shrinkage and thickness shrinkage;
the shrinkage directions of the transverse shrinkage and thickness shrinkage are crossed;
the shrinkage force of transverse shrinkage is the force in the direction horizontal to the unidirectional veneer, and the force in a direction intersected with the extending direction of the wood fibers and/or fiber bundles in the plane; and/or, the shrinkage force of thickness shrinkage is the force in the direction vertical to the unidirectional veneer; and
the force in the horizontal direction and the force in the vertical direction are original applied forces independently from each other, and/or, forces produced by a force after decomposed or forces after composed.

Preferably, the thickness of the unidirectional wood fiber paper is less than or equal to 0.2 mm;
and/or, the areal density of the unidirectional wood fiber paper is 20-200 g/m²;
and/or, the tensile strength of unidirectional wood fiber paper in the direction parallel to the wood fibers and/or fiber bundles is 150-1000 MPa.

Preferably, the apparent thickness of the unidirectional wood fiber paper under the pressure not greater than 0.005 MPa does not exceed 4 times of the average thickness of the unidirectional wood fiber paper;
and/or, the weight loss of the unidirectional veneer with partial substances removed is 10%-60% relative to the unidirectional veneer;
and/or, the percentage of shrinkage of transverse shrinkage is 2%-40%; and the percentage of shrinkage of thickness shrinkage is 20%-90%.

Preferably, the mass of the second resin layer is 0%-30% of that of the wood fiber paper composite; and the mass of the fiber reinforced layer is 0%-10% of that of the wood fiber paper composite.

Preferably, the second resin layer comprises thermosetting resin and/or thermoplastic resin;
and/or, the areal density of the fiber reinforced layer is 1-20 g/m².

Preferably, the thermosetting resin can be selected from one or more of epoxy resin, unsaturated polyester, polybutadiene resin, phenolic resin, melamine resin and crosslinkable polyurethane;
and/or, the thermoplastic resin can be selected from one or more of polyamide, polylactic acid, polyurethane, ethylene-vinyl acetate copolymer, ethylene-acrylate copolymer and copolyester;
and/or, the fiber reinforced layer is selected from fiber mat with low areal density; and the fiber mat with low areal density is selected from one or more of a carbon fiber mat, a glass fiber mat and an aramid fiber mat.

Preferably, the areal density of the wood fiber paper composite is increased by 3-50 g/m² compared with that of the unidirectional wood fiber paper.

Preferably, the mass of the wood fiber paper is 30%-84% of that of the wood honeycomb;
and/or, the mass of the first resin is 15%-69% of that of the wood honeycomb
and/or, the mass of the adhesive is 1%-30% of that of the wood honeycomb

The present invention further provides a preparation method for a wood honeycomb, comprising the following steps:
S1) coating a plurality of pieces of wood fiber paper with adhesive, then carrying out staggered stacking, and carrying out hot-pressing and curing to obtain an unexpanded honeycomb core block;
S2) expanding the unexpanded honeycomb core block to obtain a plain honeycomb; and
S3) transferring first resin to the surface of the plain honeycomb, and carrying out curing to obtain the wood honeycomb;
the plurality of pieces of wood fiber paper comprise unidirectional wood fiber paper and/or wood fiber paper composite; and the wood fiber paper composite comprises the unidirectional wood fiber paper, and a second resin layer and/or a fiber reinforced layer which are combined with the surface of the unidirectional wood fiber paper;
the density of the wood honeycomb is 29-144 kg/m³; and
the compressive strength of the wood honeycomb is 0.4-13.8 MPa.

Preferably, a preparation method for the unidirectional wood fiber paper comprises the following steps:
A1) carrying out chemical modification on a unidirectional veneer to obtain a unidirectional veneer with partial substances removed; and
A2) carrying out shrinkage treatment on the unidirectional veneer with partial substances removed in at least one direction to obtain the unidirectional wood fiber paper; and
decomposition of the shrinkage force comprises transverse shrinkage and thickness shrinkage.

Preferably, the thickness of the unidirectional veneer is 0.05-0.6 mm;
and/or, the chemical modification in A1) is performed in a closed high-pressure system; the target temperature of chemical modification is 100-150°C; the target pressure of chemical modification is 0.07-1.9 MPa; the chemical modification is maintained in the target temperature/target pressure for 1-12 h;
and/or, the chemical modification is performed under normal pressure; the chemical modification is maintained in the target temperature/target pressure for 24-72 h; the temperature of chemical modification is the temperature at which water boils without elevated pressures;
and/or, in step A1), a modification solution for chemical modification comprises an alkaline substance, a sulfonating agent and water;
the pH of the modification solution is 12-14;
the concentration of alkaline substance in the modification solution is 0.01-5 kg/L;
the alkaline substance is selected from one or more of sodium hydroxide, potassium hydroxide, sodium bicarbonate and potassium bicarbonate;
the concentration of the sulfonating agent in the modification solution is 0.01-5 kg/L;
the sulfonating agent in the modification solution is selected from one or more of sulfite, chlorosulfonic acid, hydroxymethylsulfonate, sulfuryl chloride and sulfamic acid;
and/or, the material ratio of the unidirectional veneer to the modification solution for chemical modification is 4.6-184 cm³:1 L.

Preferably, the shrinkage treatment comprises the transverse shrinkage treatment and the thickness shrinkage treatment; and the force of the transverse shrinkage treatment is crossed to the force of the thickness shrinkage treatment.

Preferably, the transverse shrinkage treatment comprises: applying an external mechanical force in the transverse direction and/or performing dehydration spontaneous shrinkage; and
the external mechanical force applied in the transverse direction is in the direction intersected with the extending direction of the wood fibers and/or fiber bundles of the unidirectional veneer with partial substances removed in the plane.

Preferably, applying the external mechanical force in the transverse direction is specifically that a film material that can perform transverse shrinkage is used and attached to the surface of unidirectional veneer with partial substances removed, and pressure is applied;
and/or, negative pressure is transversely applied to the unidirectional veneer with partial substances removed;
and/or, roller rubbing treatment is performed on the unidirectional veneer with partial substances removed;
and/or, pressure is transversely applied to the unidirectional veneer with partial substances removed.

Preferably, pressure for applying the external mechanical force in the transverse direction is preferably 0.001-1.5 MPa;
and/or, the temperature of transverse shrinkage treatment is 15 °C-150°C;
and/or, the time of transverse shrinkage treatment is 1 s to 4 min;
and/or, the intensity of the negative pressure is smaller than or equal to one atmospheric pressure.

Preferably, the thickness shrinkage treatment is to apply a mechanical pressure in the thickness direction;
the pressure for applying the mechanical pressure in thickness direction is 0.01-80 MPa;
and/or, the time of the thickness shrinkage treatment is 0.1-4 min;
and/or, the temperature of the thickness shrinkage treatment is 15 °C-150°C.

Preferably, the thickness shrinkage is performed on a single or stacked veneers; 2-20 veneers are stacked; and
the pressure of thickness shrinkage treatment in a stacking condition is 0.1-60 MPa.

Preferably, the percentage of shrinkage of transverse shrinkage is 2%-40%; and
the percentage of shrinkage of thickness shrinkage is 20%-90%.

Preferably, the thickness shrinkage comprises hot-pressing treatment under a negative pressure condition;
the pressure of hot-pressing treatment is 0.1-60 MPa;
and/or, the temperature of hot-pressing treatment is 50°C-150°C;
and/or, the time of the hot-pressing treatment is 0.5-20 min.

Preferably, levelling treatment is carried out after shrinkage treatment; and
the levelling treatment is to perform hot pressing in a negative pressure air exhaust environment.

Preferably, exhaust channels are arranged on two contact surfaces or a single contact surface of the unidirectional wood fiber paper during levelling treatment.

Preferably, the pressure of the planar hot pressing is 0.01-2 MPa;
and/or, the time of the levelling treatment is 0.1-4 min;
and/or, the temperature of levelling treatment is 40°C-150°C.

Preferably, the levelling treatment is selected from one or more of vacuum thermoforming or negative-pressure hot-pressing treatment;
and/or, the water content of the unidirectional wood fiber paper is less than or equal to 10%.

Preferably, the wood fiber paper composite comprises the unidirectional wood fiber paper and the second resin layer combined with the surface of the unidirectional wood fiber paper; the preparation method for the wood fiber paper composite comprises:
transferring a diluted second resin feedstock to the surface of the unidirectional wood fiber paper, and curing to obtain the wood fiber paper composite; and
the second resin feedstock is selected from one or more of a precursor of the second resin, a monomer of second resin, and the second resin.

Preferably, the wood fiber paper composite comprises the unidirectional wood fiber paper, the second resin layer and the fiber reinforced layer which are combined with the surface of the unidirectional wood fiber paper; the preparation method for the wood fiber paper composite comprises:
transferring the diluted second resin feedstock to the surface of the unidirectional wood fiber paper, covering with a film by the fiber reinforced layer, and curing to obtain the wood fiber paper composite; and
the second resin feedstock is selected from one or more of a precursor of the second resin, a monomer of second resin, and the second resin.

Preferably, in step S3), the first resin is transferred to a plain honeycomb for multiple times and cured for multiple times so as to form the wood honeycomb; the multiple times of curing are performed between two times of resin transferring, and the last step is curing; the transferring method is selected from one or more of dip coating, shower coating and spray coating.

Preferably, step S3) of transferring the resin to the plain honeycomb specifically comprises the following steps:
spray-coating, shower-coating or dip-coating the first resin in honeycomb through holes of the plain honeycomb, and then uniformly coating the first resin on the plain honeycomb after expanding and pressing the honeycomb.

The present invention further provides a wood fiber paper composite, comprising unidirectional wood fiber paper, and a second resin layer and/or a fiber reinforced layer combined with at least one surface of the unidirectional wood fiber paper.

Preferably, the unidirectional wood fiber paper is prepared by shrinkage of a unidirectional wood veneer with partial substances removed in at least one direction;
the partial substances comprise lignin and hemicellulose;
decomposition of the shrinkage force comprises transverse shrinkage and thickness shrinkage;
the unidirectional wood fiber paper comprises wood fibers and/or fiber bundles; the wood fibers and/or fiber bundles are integrally arranged or extended in a single direction in a microscopic aspect;
the tensile strength of the wood fiber paper composite in the direction parallel to the wood fibers and/or fiber bundles is 6-30 kN/m;
and/or, the tensile strength of the wood fiber paper composite in the direction vertical to the wood fibers and/or fiber bundles is 0.7-4 kN/m;
and/or, the elasticity modulus of the wood fiber paper composite in the direction parallel to the wood fibers and/or fiber bundles is 8-80 GPa;
and/or, the elasticity modulus of the wood fiber paper composite in the direction vertical to the wood fibers is 0.8-3 GPa.

Preferably, the mass of the second resin layer is 0-30% of that of the wood fiber paper composite paper; and the mass of the fiber reinforced layer is 0-10% of that of the wood fiber paper composite, and the two are not zero at the same time.

Preferably, the second resin layer comprises thermosetting resin and/or thermoplastic resin; the thermosetting resin is selected from one or more of epoxy resin, unsaturated polyester, polybutadiene resin, phenolic resin, melamine resin and crosslinkable polyurethane; and the thermoplastic resin is selected from one or more of polyamide, polylactic acid, polyurethane, ethylene-vinyl acetate copolymer, ethylene-acrylate copolymer and copolyester;
the fiber reinforced layer is selected from a low-density fiber mat; and the low-density fiber mat is selected from one or more of a carbon fiber mat, a glass fiber mat and an aramid fiber mat.

Preferably, the areal density of the wood fiber paper composite is increased by 3-50 g/m² compared with that of the unidirectional wood fiber paper.

The present invention further provides use of the wood honeycomb or the wood fiber paper composite in preparing one or more of building materials, furniture materials, sports equipment, static carriers, vehicles and aircrafts.

The present invention provides a wood honeycomb, which includes a plain honeycomb and first resin combined with the surface of the plain honeycomb; the plain honeycomb includes a plurality of pieces of wood fiber paper and adhesive; the plurality of pieces of wood fiber paper are bonded by the adhesive; the plurality of pieces of wood fiber paper composite include unidirectional wood fiber paper and/or wood fiber paper composite; and the wood fiber paper composite includes unidirectional wood fiber paper, and a second resin layer and/or a fiber reinforced layer combined with the surface of the unidirectional wood fiber paper. Compared with related technology, the core material wood fiber paper of the wood honeycomb provided by the present invention is a natural environment-friendly material, and the mechanical properties in the direction parallel to wood fibers and the direction vertical to the wood fibers are excellent, so that the obtained wood honeycomb is excellent in mechanical property, light in weight, low in cost and environmentally friendly.

### BRIEF DESCRIPTION OF THE DRAWINGS

FIG. 1 is a schematic diagram of a preparation flow of a wood honeycomb provided by the present invention;
FIG. 2 is a diagram of a sample in different stages in a preparation flow of a wood honeycomb provided by the present invention;
FIG. 3 is a structural schematic diagram of a material frame for a vertical reactor provided by the present invention;
FIG. 4 is a schematic diagram of a unidirectional veneer placed in a vertical reactor provided by the present invention;
FIG. 5 is a structural schematic diagram of a material frame for a horizontal reactor provided by the present invention;
FIG. 6 is a schematic diagram of a unidirectional veneer placed in a horizontal reactor provided by the present invention;
FIG. 7 is a schematic diagram of sinking and shrinkage of a tube cavity of unidirectional wood fiber paper in spontaneous transverse shrinkage provided by the present invention;
FIG. 8 is a schematic diagram of continuous hot pressing processing of a hot roll provided by the present invention;
FIG. 9 is a schematic diagram of continuous hot pressing processing of a continuous flat press provided by the present invention;
FIG. 10 is a schematic diagram of continuous hot pressing processing of a belt press provided by the present invention;
FIG. 11 is a schematic diagram of splicing of unidirectional wood fiber paper;
FIG. 12 is an object diagram of different wood fiber paper composite;
FIG. 13 is a structural schematic diagram of wood fiber paper composite;
FIG. 14 is a schematic diagram of splicing of unidirectional wood fiber paper by a film covering layer;
FIG. 15 is a schematic diagram of two glue coating directions during coating wood fiber paper composite with adhesive;
FIG. 16 is a schematic diagram of a glue applying position of a adhesive on wood fiber paper provided by the present invention;
FIG. 17 is a schematic diagram of a preparation flow of a white wood honeycomb provided by the present invention;
FIG. 18 is a structural schematic diagram of a wood honeycomb provided by the present invention;
FIG. 19 is a top view of a wood honeycomb provided by the present invention;
FIG. 20 is a top view of a wood honeycomb provided by the present invention;
FIG. 21 is a structural schematic diagram of a wood honeycomb component provided by the present invention;
FIG. 22 is a photo of a unidirectional veneer with partial substances removed in a wet state in an Example 1 of the present invention;
FIG. 23 is a diagram of spontaneous transverse shrinkage of a unidirectional veneer with partial substances removed in an Example 1 of the present invention;
FIG. 24 is a curve diagram of a tensile stress test of wood fiber paper in a fiber direction in an Example 1 of the present invention; and
FIG. 25 is an object diagram of shrinkage of a chemically treated veneer in a thickness direction in an Contrast Example 1 of the present invention.

### DETAILED DESCRIPTION OF THE PRESENT INVENTION

The technical solutions in the embodiments of the present invention will be clearly and completely described below in conjunction with the embodiments of the present invention, and it is obvious that the described embodiments are only part embodiments of the present invention, not all embodiments. Based on the embodiments in the present invention, all other embodiments obtained by those skilled in the art without making creative labor belong to the scope of protection of the present invention.

The present invention provides a wood honeycomb, which includes a plain honeycomb and first resin combined a surface of the plain honeycomb; the plain honeycomb includes a plurality of pieces of wood fiber paper and adhesive; the plurality of pieces of wood fiber paper are bonded by the adhesive; a plurality of pieces of wood fiber paper composite include unidirectional wood fiber paper and/or wood fiber paper composite; and the wood fiber paper composite includes unidirectional wood fiber paper and a second resin layer and/or a fiber reinforced layer combined the surface of the unidirectional wood fiber paper.

According to the present invention, the wood fiber paper includes wood fibers and/or fiber bundles; the wood fibers and/or fiber bundles are integrally arranged or extended in a single direction in a microscopic aspect; specifically, more than or equal to 70% of wood fibers and/or fiber bundles are integrally arranged or extended in a single direction in a microscopic aspect, and further, specifically, more than or equal to 80% of wood fibers and/or fiber bundles are arranged or extended in a single direction in a microscopic aspect.

According to the present invention, the tensile strength of the wood fiber paper in a direction parallel to the wood fibers and/or fiber bundles is 6-30 kN/m; and optionally, the tensile strength of the wood fiber paper in the direction parallel to the wood fibers and/or fiber bundles is 6 kN/m, 8 kN/m, 10 kN/m, 12 kN/m, 14 kN/m, 16 kN/m, 18 kN/m, 20 kN/m, 22 kN/m, 24 kN/m, 26 kN/m, 28 kN/m, 30 kN/m or a range between any two of the above values.

According to the present invention, the tensile strength of the wood fiber paper in a direction vertical to the wood fibers and/or fiber bundles is 0.3-4 kN/m; and optionally, the tensile strength of the wood fiber paper in the direction vertical to the wood fibers and/or fiber bundles is 0.3 kN/m, 0.5 kN/m, 0.8 kN/m, 1.0 kN/m, 1.2 kN/m, 1.5 kN/m, 2.8 kN/m, 2.0 kN/m, 2.2 kN/m, 2.5 kN/m, 3.8 kN/m, 3.0 kN/m, 3.2 kN/m, 3.5 kN/m, 3.8 kN/m, 4 kN/m or a range between any two of the above values.

According to the present invention, the elasticity modulus of the wood fiber paper in the direction parallel to wood fibers and/or fiber bundles is 8-80 GPa; and optionally, the elasticity modulus of the wood fiber paper in the direction parallel to the wood fibers and/or fiber bundles is 8 GPa, 10 GPa, 15 GPa, 20 GPa, 25 GPa, 30 GPa, 35 GPa, 40 GPa, 45 GPa, 50 GPa, 55 GPa, 60 GPa, 65 GPa, 70 GPa, 75 GPa, 80 GPa or a range between any two of the above values.

According to the present invention, the elasticity modulus of the wood fiber paper in the direction vertical to the wood fibers and/or fiber bundles is 0.4-3 GPa, and optionally, the elasticity modulus of the wood fiber paper in the direction vertical to the wood fibers and/or fiber bundles is 0.4 GPa, 0.6 GPa, 0.8 GPa, 1.0 GPa, 1.2 GPa, 1.5 GPa, 1.8 GPa, 2.0 GPa, 2.2 GPa, 2.4 GPa, 2.6 GPa, 2.8 GPa, 3 GPa or a range between any two of the above values.

According to the present invention, the unidirectional wood fiber paper is formed by shrinking a unidirectional wood veneer with partial substances removed in at least one direction; and the partial substances include lignin and hemicellulose.

According to the present invention, the thickness of the unidirectional wood fiber paper is less than or equal to 0.2 mm.

According to the present invention, the density of the unidirectional wood fiber paper is 0.8-1.5 g/cm³; and optionally, the density of the unidirectional wood fiber paper is 0.8 g/cm³, 0.9g/cm³, 1.0 g/cm³, 1.1g/cm³, 1.2 g/cm³, 1.3 g/cm³, 1.4 g/cm³, 1.5 g/cm³ or a range between any two of the above values.

According to the present invention, the areal density of the unidirectional wood fiber paper is 20-200 g/m²; and optionally, the areal density of the unidirectional wood fiber paper is 20 g/m², 30 g/m², 50 g/m², 70 g/m², 80 g/m², 100 g/m², 120 g/m², 140 g/m², 160 g/m², 180 g/m², 200 g/m² or a range between any two of the above values.

According to the present invention, the tensile strength of the unidirectional wood fiber paper in the direction parallel to the wood fibers and/or fiber bundles is 150-1000 MPa; and optionally, the tensile strength of the unidirectional wood fiber paper in the direction parallel to the wood fibers and/or fiber bundles is 150 MPa, 250 MPa, 350 MPa, 450 MPa, 500 MPa, 600 MPa, 700 MPa, 800 MPa, 900 MPa, 1000 MPa or a range between any two of the above values.

According to the present invention, the Young modulus of the unidirectional wood fiber paper in the direction parallel to the wood fibers and/or fiber bundles is preferably 20-70 GPa, and more preferably 25-70 GPa; and optionally, the Young modulus of the unidirectional wood fiber paper in the direction parallel to the wood fibers and/or fiber bundles is 20 GPa, 25 GPa, 30 GPa, 35 GPa, 40 GPa, 45 GPa, 50 GPa, 55 GPa, 60 GPa, 65 GPa, 70 GPa or a range between any two of the above values.

According to the present invention, the tensile strength of the unidirectional wood fiber paper in the direction parallel to the wood fibers and/or fiber bundles is preferably 6-30 kN/m, and more preferably 11-25 kN/m; and optionally, the tensile strength of the unidirectional wood fiber paper in the direction parallel to the wood fibers and/or fiber bundles is 11 kN/m, 12 kN/m, 13 kN/m, 14 kN/m, 15 kN/m, 16 kN/m, 17 kN/m, 18 kN/m, 19 kN/m, 20 kN/m, 21 kN/m, 22 kN/m, 23 kN/m, 24 kN/m, 25 kN/m or a range between any two of the above values.

According to the present invention, the elasticity modulus of the unidirectional wood fiber paper in the direction parallel to the wood fibers and/or fiber bundles is preferably 8-80 GPa; and optionally, the elasticity modulus of the unidirectional wood fiber paper in the direction parallel to the wood fibers and/or fiber bundles is 8 GPa, 10 GPa, 15 GPa, 20 GPa, 25 GPa, 30 GPa, 35 GPa, 40 GPa, 45 GPa, 50 GPa, 55 GPa, 60 GPa, 65 GPa, 70 GPa, 75 GPa, 80 GPa or a range between any two of the above values.

According to the present invention, the tensile strength of the unidirectional wood fiber paper in the direction vertical to the wood fibers and/or fiber bundles is preferably 0.3-4 kN/m, and more preferably 0.3-1.5 kN/m; and optionally, the tensile strength of the unidirectional wood fiber paper in the direction vertical to the wood fibers and/or fiber bundles is 0.3 kN/m, 0.4 kN/m, 0.5 kN/m, 0.6 kN/m, 0.7kN/m, 0.8 kN/m, 0.9 kN/m, 1.0 kN/m, 1.1 kN/m, 1.2 kN/m, 1.3 kN/m, 1.4 kN/m, 1.5 kN/m or a range between any two of the above values.

According to the present invention, the elasticity modulus of the unidirectional wood fiber paper in the direction vertical to the wood fibers and/or fiber bundles is preferably 0.4-3 GPa, and more preferably 0.4-2 GPa; and optionally, the elasticity modulus of the unidirectional wood fiber paper in the direction vertical to the wood fibers and/or fiber bundles is 0.4 GPa, 0.6 GPa, 0.8 GPa, 1.2 GPa, 1.4 GPa, 1.6 GPa, 1.8 GPa, 2 GPa or a range between any two of the above values.

The unidirectional wood fiber paper provided by the present invention has high flatness, specifically, the apparent thickness of the unidirectional wood fiber paper under the pressure not greater than 0.005 MPa does not exceed 4 times of the average thickness of the unidirectional wood fiber paper.

Further, specifically, the apparent thickness of the unidirectional wood fiber paper under the pressure of 0.005 MPa preferably does not exceed 3 times of the average thickness of the unidirectional wood fiber paper.

Moreover, those skilled in the art can understand that the apparent thickness is related to pressure, and the greater the pressure, the smaller the apparent thickness, and the smaller the multiple between the apparent thickness and the average thickness, so the description of flatness can also be equivalent to the above description.

In a specific embodiment provided by the present invention, a flatness testing method includes: putting unidirectional wood fiber paper between two plane objects, and applying pressure to the plane to enable the unidirectional wood fiber paper to be subjected to a smaller pressure, in which, the flat wood fiber paper will incline to be fitted with the pressure-applied plane, and the difference value between the highest point and the lowest point of the pressed unidirectional wood fiber paper is the apparent thickness of the unidirectional wood fiber paper. The average thickness of the unidirectional wood fiber paper is the thickness average value, measured by a micrometer, of different position points of the unidirectional wood fiber paper.

According to the present invention, the unidirectional wood fiber paper is prepared by removing partial substances from the unidirectional a wood veneer by chemical modification and shrinking in two directions; in the present invention, the unidirectional wood fiber paper is produced from unidirectional wood in the nature, fibers of the unidirectional wood grow along the longitudinal direction of a trunk, and the fibers are closely and consistently arranged to form the linear characteristic of parallel arrangement. In the present invention, the thickness of the unidirectional veneer is less than or equal to 0.6 mm, can be further between 0.05-0.6 mm, and optionally, the thickness of the unidirectional veneer can be 0.05 mm, 0.1 mm, 0.2 mm, 0.3 mm, 0.4 mm, 0.5 mm, 0.6 mm or a range between any two of the above values; in the embodiment provided by the present invention, the unidirectional veneer with the thickness of 0.28 mm is taken as an example for description; the areal density of the unidirectional veneer is preferably 20-200 g/m², more preferably 70-200 g/m²; optionally, the areal density of the unidirectional veneer is 20 g/m², 50 g/m², 70 g/m², 80 g/m², 90 g/m², 100 g/m², 110 g/m², 120 g/m², 130 g/m², 150 g/m², 180 g/m², 200 g/m² or a range between any two of the above values; and generally, the thicker the unidirectional veneer is, the larger the areal density is.

According to the present invention, the weight loss of the unidirectional veneer with partial substances removed is preferably 10%-60% relative to the unidirectional veneer; optionally, the weight loss of the unidirectional veneer with partial substances removed relative to the unidirectional veneer is 10%, 20%, 25%, 30%, 35%, 40%, 45%, 50%, 55%, 60% or a range between any two of the above values. The partial substances include lignin and hemicellulose.

According to the present invention, the shrinkage in the at least one direction includes transverse shrinkage and thickness shrinkage according to force decomposition.

In a specific embodiment provided by the present invention, the shrinkage in the at least one direction specifically involves shrinkage in at least two directions; the shrinkage includes the transverse shrinkage and the thickness shrinkage; and the shrinkage force directions of the transverse shrinkage and the thickness shrinkage are crossed.

In a specific embodiment provided by the present invention, the shrinkage is bidirectional shrinkage; and the bidirectional shrinkage includes transverse shrinkage and thickness shrinkage, namely the unidirectional veneer with partial substances removed is subjected to bidirectional shrinkage to obtain the unidirectional wood fiber paper.

The percentage of shrinkage of the transverse shrinkage is preferably 2%-40%; optionally, the percentage of shrinkage of the transverse shrinkage is 2%, 5%, 10%, 15%, 20%, 25%, 30%, 35%, 40% or a range between any two of the above values; and the transverse percentage of shrinkage is increased, and the tensile strength and modulus of the finally obtained unidirectional wood fiber paper in the direction vertical to the fiber direction have the increasing tendency; and therefore, it can be selected according to needs.

The percentage of shrinkage of the thickness shrinkage is preferably 20%-90%, more preferably 20%-86%; optionally, the percentage of shrinkage of the thickness shrinkage is 20%, 25%, 30%, 35%, 40%, 45%, 50%, 55%, 60%, 65%, 70%, 75%, 80%, 85%, 86%, 90% or a range between any two of the above values; the higher the thickness percentage of shrinkage is, the thinner the unidirectional wood fiber paper is; the tensile strength and modulus in the fiber direction have the increasing tendency; and it can be selected according to needs.

According to the present invention, the shrinkage force directions of transverse shrinkage and thickness shrinkage are crossed; and the crossed angle is preferably 60°-90°.

In a specific embodiment provided by the present invention, the unidirectional veneer with partial substances removed includes wood fibers and/or fiber bundles; the wood fibers and/or the fiber bundles are integrally arranged or extend in a single direction in the microcosmic aspect, and the force is in a direction intersected with the extending direction of the wood fibers and/or fiber bundles in the plane; the in-plane intersection is also in direction vertical to the fiber direction in the macroscopic aspect; the shrinkage force of the transverse shrinkage is the force of the unidirectional veneer in the horizontal direction; and/or, the shrinkage force of the thickness shrinkage is the force of the unidirectional veneer in the vertical direction; and the force in the horizontal direction and the force in the vertical direction are original applied forces independently from each other, and/or, forces produced by a force after decomposed or forces after composed.

Both the thickness and density of the unidirectional wood fiber paper obtained by shrinkage in at least two directions will be changed; the thickness of the unidirectional wood fiber paper is smaller than that of the unidirectional veneer, and is preferably 10%-80% of the thickness of the unidirectional veneer; and optionally, the thickness of the unidirectional wood fiber paper can be 10%, 15%, 20%, 25%, 30%, 35%, 40%, 45%, 50%, 55%, 60%, 65%, 70%, 75%, and 80% of the thickness of the unidirectional veneer or a range between any two of the above values.

According to the present invention, the feedstock of the unidirectional wood fiber paper is natural wood, and it is 100% natural material.

According to the present invention, the unidirectional wood fiber paper can be spliced to infinite width and length theoretically, specifically, the length of a single piece of non-spliced unidirectional wood fiber paper is preferably 0.1-5 m.

According to the present invention, the water content of the unidirectional wood fiber paper is preferably below 10 wt%; and the unidirectional wood fiber paper does not wrinkle when being placed at room temperature.

According to the present invention, the wood fiber paper composite includes unidirectional wood fiber paper and a second resin layer and/or a fiber reinforced layer combined at least one surface of the unidirectional wood fiber paper; the mass of the second resin layer is 0%-30% of that of the wood fiber paper composite; and optionally, the mass of the second resin layer is 0%, 5%, 10%, 15%, 20%, 25%, 30% of that of the wood fiber paper composite or a range between any two of the above value. The mass of the fiber reinforced layer is 0%-10% of that of the wood fiber paper composite; and optionally, the mass of the fiber reinforced layer is 0%, 2%, 4%, 6%, 8%, 10% of that of the wood fiber paper composite or a range between any two of the above values. The second resin layer and the fiber reinforced layer are preferably made of materials with low areal density, so that the overall density cannot be not obviously increased; the areal density of the wood fiber paper composite is improved by 3-50 g/m² compared with that of the unidirectional wood fiber paper; and optionally, the areal density of the wood fiber paper composite is improved by 3 g/m², 5 g/m², 10 g/m², 15 g/m², 20 g/m², 25 g/m², 30 g/m², 35 g/m², 40 g/m², 45 g/m², 50 g/m² or a range between any two of the above values compared with that of the unidirectional wood fiber paper. Specifically, the areal density of the wood fiber paper composite is preferably 60-120 g/m²; and optionally, the areal density of the wood fiber paper composite is 60 g/m², 70 g/m², 80 g/m², 90 g/m², 100 g/m², 110 g/m², 120 g/m² or a range between any two of the above values.

Compared with the unidirectional wood fiber paper, the wood fiber paper composite attached with the second resin layer and/or the fiber reinforced layer mainly embodies the improvement of tensile strength in the direction vertical to the wood fibers and/or fiber bundles, meanwhile, a very low density is still kept, and moreover, overall size change can be achieved.

Specifically, the tensile strength of the wood fiber paper composite in the direction vertical to the wood fibers and/or fiber bundles is improved by 5%-100% compared with that of the unidirectional wood fiber paper; and optionally, the tensile strength is improved by 5%, 10%, 15%, 20%, 25%, 30%, 35%, 40%, 45%, 50%, 55%, 60%, 65%, 70%, 75%, 80%, 85%, 90%, 95%, 100% or a range between any two of the above values.

Further, specifically, the tensile strength of the wood fiber paper composite in the direction vertical to the wood fibers and/or fiber bundles is preferably 0.7-4 kN/m; and optionally, the tensile strength of the wood fiber paper composite in the direction vertical to the wood fibers and/or fiber bundles is specifically 0.7 kN/m, 0.8 kN/m, 1.2 kN/m, 1.4 kN/m, 1.6 kN/m, 1.8 kN/m, 2.0 kN/m, 2.2 kN/m, 2.4 kN/m, 2.6 kN/m, 2.8 kN/m, 3.0 kN/m, 3.5 kN/m, 4.0 kN/m or a range between any two of the above values.

Specifically, the elasticity modulus of the wood fiber paper composite in the direction vertical to the wood fibers and/or fiber bundles is improved by 5%-100% compared with that of the unidirectional wood fiber paper; and optionally, the elasticity modulus is improved by 5%, 10%, 15%, 20%, 25%, 30%, 35%, 40%, 45%, 50%, 55%, 60%, 65%, 70%, 75%, 80%, 85%, 90%, 95%, 100% or a range between any two of the above values.

Further, specifically, the elasticity modulus of the wood fiber paper composite in the direction vertical to the wood fiber direction is preferably 0.8-3 GPa; and optionally, the elasticity modulus of the wood fiber paper composite in the direction vertical to the wood fiber direction is preferably 0.8 GPa, 1 GPa, 1.2 GPa, 1.4 GPa, 1.6 GPa, 1.8 GPa, 2 GPa, 2.2 GPa, 2.4 GPa, 2.6 GPa, 2.8 GPa, 3 GPa or a range between any two of the above values. The thickness of the wood fiber paper composite is preferably 0.07-0.21 mm.

According to the present invention, the tensile strength of the wood fiber paper composite in the direction parallel to the wood fiber and/or fiber bundle direction is preferably 6-30 kN/m, more preferably 11-25 kN/m; and optionally, the tensile strength of the wood fiber paper composite in the direction parallel to the wood fiber and/or fiber bundle direction is 11 kN/m, 12 kN/m, 13 kN/m, 14 kN/m, 15 kN/m, 16 kN/m, 17 kN/m, 18 kN/m, 19 kN/m, 20 kN/m, 21 kN/m, 22 kN/m, 23 kN/m, 24 kN/m, 25 kN/m or a range between any two of the above values.

According to the present invention, the elasticity modulus of the wood fiber paper composite in the direction parallel to the wood fiber and/or fiber bundle direction is preferably 8-80 GPa; and optionally, the elasticity modulus of the wood fiber paper composite in the direction parallel to the wood fiber and/or fiber bundle direction is 8 GPa, 10 GPa, 15 GPa, 20 GPa, 25 GPa, 30 GPa, 35 GPa, 40 GPa, 45 GPa, 50 GPa, 55 GPa, 60 GPa, 65 GPa, 70 GPa, 75 GPa, 80 GPa or a range between any two of the above values.

In one specific embodiment provided by the present invention, the wood fiber paper composite includes the unidirectional wood fiber paper and the second resin layer attached to at least one surface of the unidirectional wood fiber paper, and further, specifically, the second resin layers are attached to both surfaces of the unidirectional wood fiber paper; the mass of the second resin layers is 0.1%-30% of that of the wood fiber paper composite; and the areal density of the wood fiber paper composite is increased by 3-40 g/m² compared with that of the unidirectional wood fiber paper.

In another specific embodiment provided by the present invention, the wood fiber paper composite includes the unidirectional wood fiber paper, and the second resin layer and the fiber reinforced layer which are attached to at least one surface of the unidirectional wood fiber paper; the fiber reinforced layer is positioned on the side, far away from the unidirectional wood fiber paper, of the second resin layer; further, specifically, the second resin layer and the fiber reinforced layer are arranged on both surfaces of the unidirectional wood fiber paper in sequence; the mass of the second resin layer is 0.1%-30% of that of the wood fiber paper composite; the mass of the fiber reinforced layer is 0.1%-10% of that of the wood fiber paper composite; and the areal density of the wood fiber paper composite is increased by 10-50 g/m² compared with that of the unidirectional wood fiber paper.

According to the present invention, the second resin layer preferably includes thermosetting resin and/or thermoplastic resin; the thermosetting resin is preferably selected from one or more of epoxy resin, unsaturated polyester, polybutadiene resin, phenolic resin, melamine resin and crosslinkable polyurethane; and the thermoplastic resin is selected from one or more of polyamide, polylactic acid, polyurethane, ethylene-vinyl acetate copolymer, ethylene-acrylate copolymer and copolyester.

According to the wood honeycomb, the areal density of the fiber reinforced layer is 1-20 g/m²; and optionally, the areal density of the fiber reinforced layer is 1 g/m², 2 g/m², 5 g/m², 8 g/m², 10 g/m², 12 g/m², 15 g/m², 16 g/m², 18 g/m², 19 g/m², 20 g/m² or a range between any two of the above values.

According to the wood honeycomb, the fiber reinforced layer is preferably a low-density fiber surface mat; and the low-density fiber surface mat is preferably one or more of a carbon fiber surface mat, a glass fiber surface mat and an aramid fiber surface mat.

The wood honeycomb provided by the present invention includes the plurality of pieces of wood fiber paper, the first resin and the adhesive; the plurality of pieces of wood fiber paper and the adhesive form the plain honeycomb; and the first resin can be combined on the surface of the plain honeycomb, and can also infiltrate and permeate into the wood fiber paper that forms the plain honeycomb. The mass of the wood fiber paper is preferably 30%-84% of the mass of the wood honeycomb; and optionally, the mass of the wood fiber paper is preferably 30%, 35%, 40%, 45%, 50%, 55%, 60%, 65%, 70%, 75%, 80%, and 84% of that of the wood honeycomb or a range between any two of the above values. The mass of the first resin is preferably 15%-69% of the that of the wood honeycomb; and optionally, the mass of the first resin is preferably 15%, 20%, 25%, 30%, 35%, 40%, 45%, 50%, 55%, 60%, 65% and 69% of that of the wood honeycomb or a range between any two of the above values. The mass of the adhesive is preferably 1%-3% of that the wood honeycomb; and optionally, the mass of the adhesive is 1%, 1.5%, 2%, 2.5% and 3% of that of the wood honeycomb or a range between any two of the above values.

According to the present invention, the first resin is preferably one or more of epoxy resin, phenolic resin, unsaturated polyester resin, furfuryl alcohol resin and the like.

According to the present invention, the density of the wood honeycomb is preferably 29-144 kg/m³; and the compressive strength of the wood honeycomb is preferably 0.4-13.8 MPa.

Further, specifically, the standard density value of the wood honeycomb is 29, 32, 40, 48, 56, 64, 72, 80, 96, 128 or 144 kg/m³; and the wood honeycombs with different densities can provide different mechanical properties. Under the density of 29 kg/m³, the compressive strength of the wood honeycomb is 0.4-1.0 MPa; under the density of 32 kg/m³, the compressive strength of the wood honeycomb is 0.4-1.1 MPa; under the density of 40 kg/m³, the compressive strength of the wood honeycomb is 0.6-1.3 MPa; under the density of 48 kg/m³, the compressive strength of the wood honeycomb is 0.8-1.6 MPa; under the density of 56 kg/m³, the compressive strength of the wood honeycomb is 0.8-2 MPa; under the density of 64 kg/m³, the compressive strength of the wood honeycomb is 1.2-3.3 MPa; under the density of 72 kg/m³, the compressive strength of the wood honeycomb is 1.5-4.5 MPa; under the density of 80 kg/m³, the compressive strength of the wood honeycomb is 1.8-4.8 MPa; under the density of 96 kg/m³, the compressive strength of the wood honeycomb is 1.8-7.2 MPa; under the density of 128 kg/m³, the compressive strength of the wood honeycomb is 1.8-11.5 MPa; and under the density of 144 kg/m³, the compressive strength of the wood honeycomb is 2.2-13.8 MPa.

According to the present invention, the wood honeycomb has a continuous regular cell structure; a single cell is preferably of a hexagonal through hole structure or a expanded quadrilateral through hole structure; and a plurality of continuous cells are combined to form the wood honeycomb.

According to the present invention, the side length of each cell of the wood honeycomb is preferably 1.83-9.6 mm; and specifically, the standard side length of each cell can be 1.83 mm, 2.75 mm, 3.0 mm, 3.67mm, 4.0 mm, 5.5 mm or 9.6 mm.

According to the present invention, the maximum size of the wood honeycomb can be 2600x1300x1000 mm, and any size range can be obtained by cutting within this range.

The present invention further provides a preparation method for the wood honeycomb, which includes the following steps: S1) coating a plurality of pieces of wood fiber paper with adhesive, then carrying out staggered stacking, and carrying out hot-pressing and curing to obtain an unexpanded honeycomb core block; S2) expanding the unexpanded honeycomb core block to obtain a plain honeycomb; and S3) transferring first resin to the surface of the plain honeycomb, and carrying out curing to obtain the wood honeycomb; the plurality of pieces of wood fiber paper include unidirectional wood fiber paper and/or wood fiber paper composite; and the wood fiber paper composite includes the unidirectional wood fiber paper and a second resin layer and/or a fiber reinforced layer combined with the surface of the unidirectional wood fiber paper.

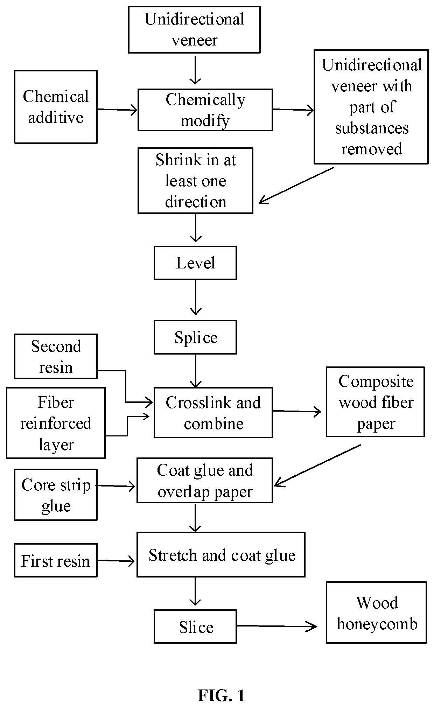

With reference to FIG. 1, FIG. 1 is a schematic diagram of a preparation flow of a wood honeycomb provided by the present invention.

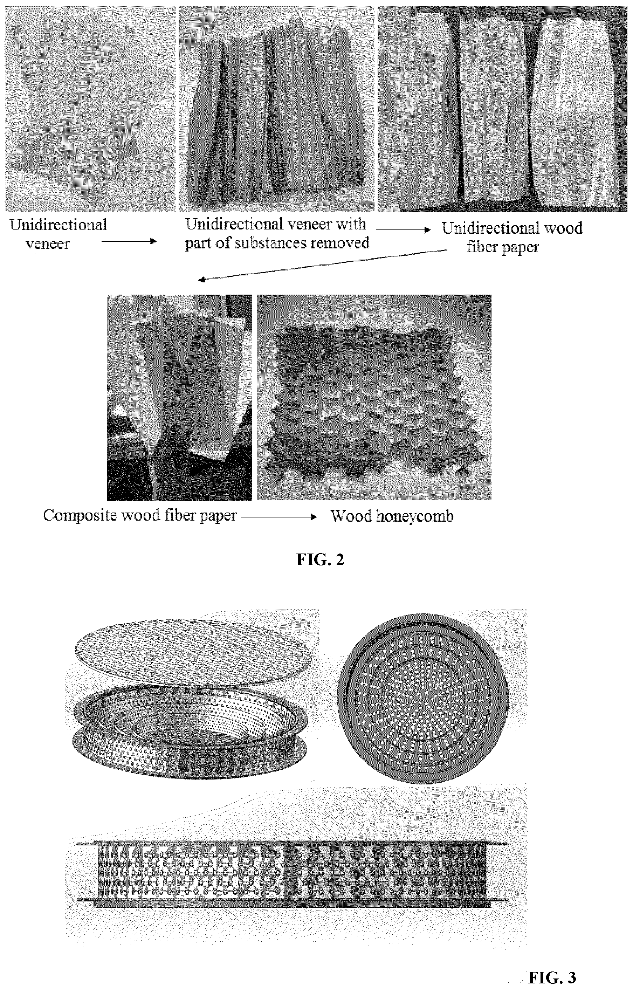

With reference to FIG. 2, FIG. 2 is a diagram of a sample in different stages in a preparation flow of a wood honeycomb provided by the present invention

The sources of all feedstocks are not specially limited by the present invention, and the feedstocks are commercially available.

According to the present invention, a preparation method for the unidirectional wood fiber paper includes the following steps: A1) carrying out chemical modification on a unidirectional veneer to obtain a unidirectional veneer with partial substances removed; and A2) carrying out shrinkage treatment on the unidirectional veneer with partial substances removed in at least one direction to obtain the unidirectional wood fiber paper; and decomposition of the shrinkage force comprises transverse shrinkage and thickness shrinkage.

In the present invention, the unidirectional veneer can be of the type well known to those skilled in the field, and there is no special restriction, and in the present invention, it includes but is not limited to walnut, oak, basswood, red sandalwood, ebony, teak, rosewood, catalpa wood, Microberlinla sp, cherry wood, phellem, poplar, beech, Cassia bakeriana Craib, pinus sylvestris, maple, white wax wood and the like; the unidirectional veneer is a natural veneer, which can avoid that artificial scientific wood doped with too many polymer materials is not environmentally friendly and its structure will be separated in subsequent chemical reaction. The material of the natural veneer is green and environment-friendly, and cellulose, hemicellulose and lignin are mutually crosslinked in a naturally formed structure, so that the structural integrity can be kept in the subsequent chemical reaction. The wood fibers of the unidirectional veneer are regularly arranged, basically all the wood fibers are arranged in the same direction, and the surface textures are also in the same direction, so the veneer has high anisotropy. The reason for selecting the unidirectional veneer rather than the veneer with other fiber directions is that relatively high internal stress will be released in the subsequent process, only the unidirectional veneer can maintain relatively good overall size consistency, and moreover, defects are not easily caused. In subsequent chemical reaction process, some substances in the wood will be removed from the structure, consequently, the wood will have an internal stress for shrinkage after the reaction. The removed substances are mainly concentrated among the wood fibers, so the internal stress release of the unidirectional veneer after the chemical reaction will be concentrated in one direction, the veneer will uniformly shrink from outside to inside in the direction vertical to the wood fibers, and therefore, the veneer does not easily have defects. If other non-unidirectional veneer with irregular fiber arrangement is used, the internal stress will be released in different directions, it is easy to have excessive internal stress in local area, and defects such as fractures will occur, resulting in waste. The thickness of the unidirectional veneer is preferably 0.08-1 mm, more preferably 0.1-0.8 mm, still more preferably 0.1-0.5 mm, yet still more preferably 0.1-0.3 mm, and most preferably 0.2-0.8 mm. In the embodiment provided by the present invention, specifically, the unidirectional veneer with the thickness of 0.28 mm is taken as an example for description; the maximum surface size of the unidirectional veneer is preferably 3000x500 mm, and any size can be obtained by cutting in this size range; and the areal density of the unidirectional veneer is preferably 20-200 g/m², more preferably 70-200 g/m², still more preferably 70-180 g/m², still more preferably 70-150 g/m², yet still more preferably 80-120 g/m², yet still more preferably 90-110 g/m², and most preferably 100-110 g/m².

The unidirectional veneer is chemically modified to obtain the unidirectional veneer with partial substances removed; the pH value of a modification solution for chemical modification is preferably 12-14; the modification solution for chemical modification preferably includes an alkaline substance, a sulfonating agent and water; the alkaline substance is an alkaline substance well known to those skilled in the art, and there is no special limitation, and in the present invention, it preferably includes but is not limited to one or more of sodium hydroxide, potassium hydroxide, sodium bicarbonate and potassium bicarbonate; the concentration of alkaline substance in the modification solution is preferably 0.01-5 kg/L, more preferably 0.05-3 kg/L, and still more preferably 0.1-2 kg/L; in some embodiments provided by the present invention, the concentration of the alkaline substance in the modification solution is specifically 0.1 kg/L, 0.05 kg/L or 0.145 kg/L; the sulfonating agent is a sulfonating agent well known to those skilled in the art, and there is no special limitation, and in the present invention, it preferably includes but is not limited to one or more of sulfite, chlorosulfonic acid, hydroxymethylsulfonate, sulfuryl chloride and sulfamic acid; the sulfite is preferably sodium sulfite; the concentration of the sulfonating agent in the modification solution is preferably 0.01-5 kg/L, more preferably 0.01-3 kg/L, and still more preferably 0.01-1 kg/L; in some embodiments provided by the present invention, the concentration of the sulfonating agent in the modification solution is specifically 0.05 kg/L, 0.075 kg/L or 0.072 kg/L; the concentration of the sulfonating agent in the modification solution can be correspondingly increased with the increase of the volume of the reaction solution, so as to make up for the decrease in mass transfer caused by the increase in the scale of chemical reaction. The modification solution can be in any volume, depending on the output demand and the reactor equipment specifications, including but not limited to 500 mL, 2 L, 4 L, 20 L, 100 L, 500 L, 1000 L, 2000 L, 5000 L, 8000 L, 10000 L, etc.; and the material ratio of the unidirectional veneer to the modification solution for chemical modification is preferably 4.6-184 cm³:1 L. The higher the material ratio, the higher the output of a single reaction, so it is generally necessary to increase the material ratio in the reaction as much as possible, but it is also necessary to comprehensively consider the difficulty of mass transfer and the excessive accumulation of materials in a reactor. In the process of reaction, the alkaline substance will react with lignin, hemicellulose and cellulose in the unidirectional veneer; taking the alkaline substance as sodium hydroxide and the sulfonating agent as sodium sulfite as an example, hemicellulose may react with sodium hydroxide to generate sodium hemicellulose (as shown in a reaction formula 1), and lignin may react with sodium hydroxide and sodium sulfite to generate sodium lignosulfonate (as shown in a reaction formula 2 and a reaction formula 3). By-products of these reactions will be separated from the unidirectional veneer structure and dissolved or suspended in the reaction solution. If the material ratio is too high, the reaction mass transfer efficiency will be reduced, and the reaction by-products are difficult to be uniformly dispersed in the system, which will lead to the reduction of the reaction rate in the local area, resulting in the reduction of the property uniformity of the unidirectional veneer after the reaction, as well as influence on the subsequent process stability and final product performance. Moreover, the excessive accumulation of materials in the reactor will also increase the mutual friction of the unidirectional veneers or the friction with the internal structure of the reactor, resulting in the damage to the unidirectional veneer.

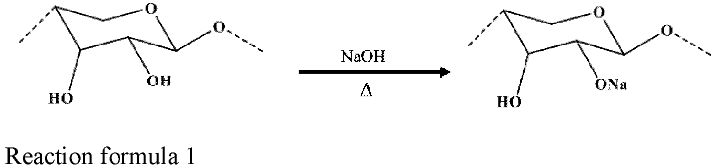

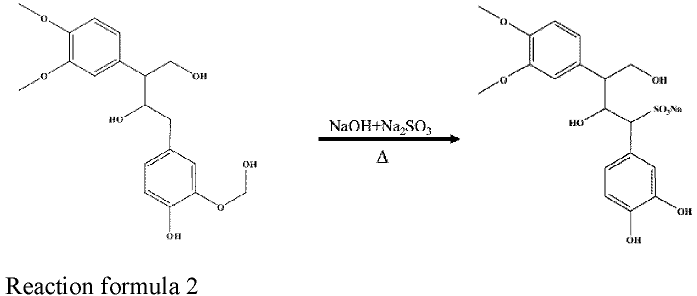

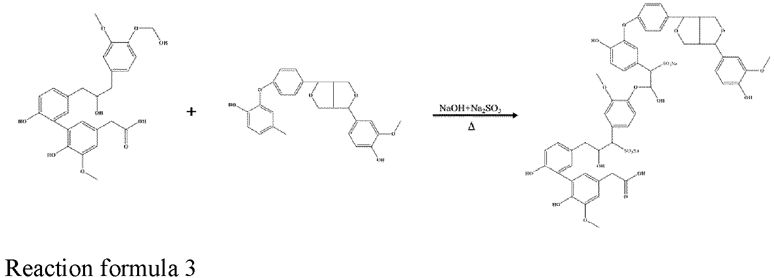

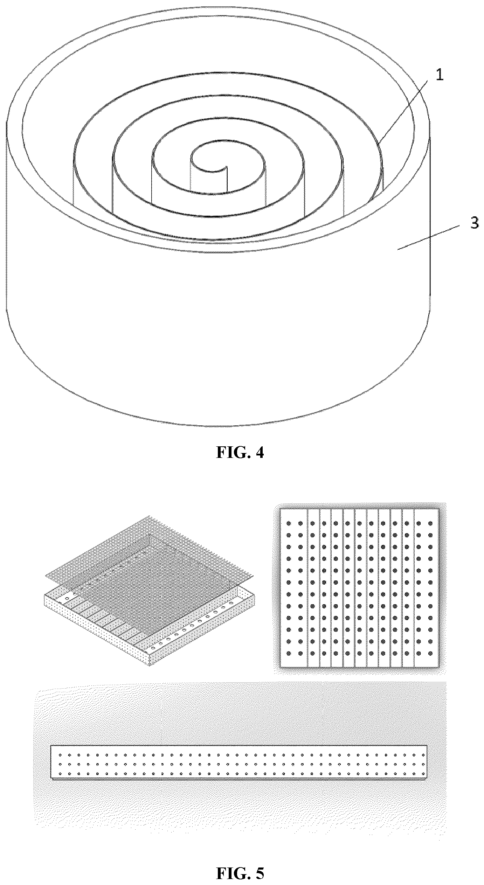

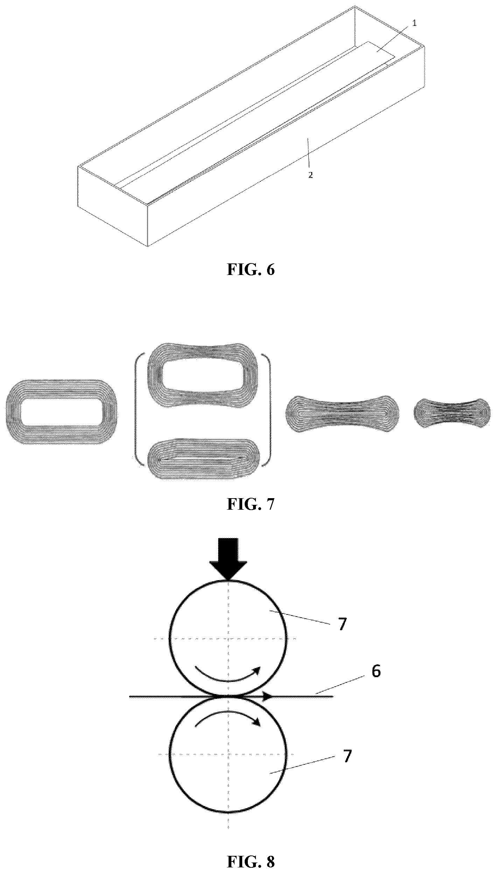

For small-scale reactions below 5 L, mass and heat transfer in the system is relatively easy, and the number of unidirectional veneers is relatively small, and the whole veneer can be curled and attached to the wall of the reactor. For reactions above 5 L, due to the large scale of the reaction, the mass and heat transfer rate in the system will be reduced, and the number of unidirectional veneers is large, so it is necessary to put the unidirectional veneer into the reactor in advance. Moreover, it is needed to add a step of pre-layering to maximize the use of the internal space of the reactor, and the unidirectional veneer is evenly arranged in all parts in the reactor; in addition, the unidirectional veneer in a single area can also be controlled to a certain number by this partitioning, thus reducing the damage to the unidirectional veneer caused by mutual friction and improving the mass transfer effect. The unidirectional veneer is preferably placed in a material frame for chemical modification; the material frame includes a frame body, a partition plate and a frame cover; the partition plate is arranged in the frame body; and the side wall of the frame body, the bottom of the frame body, the partition plate and the frame cover are all provided with holes. In a specific embodiment provided by the present invention, the material frame is a cylindrical material frame; a plurality of partition plates are provided; the plurality of partition plates are arranged in concentric circles within the frame body, either at the same intervals or at different intervals. In a specific embodiment provided by the present invention, the material frame is a cuboid material frame; a plurality of partition plates are provided; and the plurality of partition plates are arranged in parallel within the material frame, either at the same interval or at different intervals. In the present invention, the unidirectional veneer can be pre-layered with the material frame which is of an upper and lower unexpanded type, as shown in FIG. 3 and FIG. 4. FIG. 3 is a structural schematic diagram of a material frame for a vertical reactor, and FIG. 4 is a schematic diagram of a unidirectional veneer placed in a vertical reactor, in which, 1 is the unidirectional veneer, 3 is the vertical reactor, and the main body structure of the material frame is formed by a mesh plate with a certain hole. The diameter of the hole cannot be too small to affect the mass transfer effect, nor too large to lead to scratches on the veneer and reduction of the structural strength. Generally, the diameter range of the hole is 3-5 mm, and the overall hole density of the hole is 4×10⁵-3.5×10⁵ holes/m³, which is determined according to the actual working conditions and equipment conditions. The thickness of the corresponding mesh plate is needed to meet the structural stability of the frame body after loading the material, and a slab with thickness of 1-5 mm is generally selected according to the size of the material frame. The height of a single layer is mainly determined by the width of the veneer to be treated, which is generally 10-30 cm. The radius of the outermost layer and the radius of the innermost layer of the material frame depend on the specific reactor structure and the quantity of materials, and the spacing in the frame is not equidistant, generally increases from the inside to the outside in sequence, and the specific increase depends on the thickness and quantity of the veneer. The basic criterion of this design is that when loading the veneer, it is easy to operate and will not damage the veneer. FIG. 5 is a structural schematic diagram of a material frame for a horizontal reactor provided by the present invention, and the overall appearance size of the material frame depends on the structure of the horizontal reactor, and the height of the single layer depends on the width of the material, and the thickness depends on the amount of material filled and the size of the material frame. The material frame is needed to be designed as a porous structure, the diameter range of the hole is generally 3-5 mm, and the hole density of the overall hole is 6.8×10⁵-5.0×10⁵ holes/m³. The internal partition plate is a perforated mesh plate with thickness of 2 mm, and the partitioning distance can be equidistant, and the distance value is added by 10-50 mm from the width of the veneer. This allows the material to move freely inside and outside the material frame, and the size of the holes is as large as possible, so that the unidirectional veneer can be effectively layered without affecting mass transfer. The material frame is needed to be designed to be close to the inner diameter of the reactor, thus the stacked multi-layer material frame can maximize the use of the space in the reactor, and the material of the material frame is needed to be alkali and temperature resistant materials; and FIG. 6 is a schematic diagram of a unidirectional veneer placed in a horizontal reactor, in which, 1 is the unidirectional veneer, and 2 is the horizontal reactor.

The reactor can be vertical or horizontal, heating in the reactor can be in any mode as long as the temperature precision in the system can be controlled to be ±10°C. For a large-volume reactor, mass transfer can be improved by adding methods such as stirring, solution backflow, overall rotating of the reactor, and pumping of a solution by an external circulating pump. In the present invention, there are two choices for the reaction temperature and pressure of chemical modification: one is that heating is performed under normal pressure until water is in a boiling state, but it is needed to add a condensation backflow module, which leads to the increase in the reaction energy consumption, in addition, the reaction can be performed completely only when the reaction time under normal pressure, namely, the maintaining time under the target temperature/pressure is 24-72 h; in some embodiments provided by the present invention, the reaction time under normal pressure can be specifically 48 h; the other one is that heating is performed in a closed high-pressure system until the temperature exceeds the boiling temperature of water, namely the target temperature is preferably 100-150°C, more preferably 110-150°C, still more preferably 120-130°C and most preferably 125°C, and the whole system forms a high-pressure system, thus the condensation backflow module is not need to be added, the reaction can be completely performed when the reaction time, namely the maintaining time is reduced to be 1-12 h, more preferably 3-10 h, still more preferably 4-8 h, and most preferably 5-8 h; and therefore, the energy consumption of the reaction can be greatly reduced, and the process cost of chemical reaction is reduced. In addition, the pumping capacity of a material pump is 1.4-3.5 t/h. The optimal reaction temperature depends on wood species and the reactor scale, different wood species have slight temperature window differences due to different chemical components, and the larger the reactor scale is, the higher the reaction temperature is, so that the reduction in heat transfer and mass transfer is compensated. Generally, the higher the reaction temperature is, the higher the reaction rate is, but cellulose will be gradually hydrolyzed at 150°C; and because the mechanical property of the cellulose is relatively high, and it is needed to be reserved as much as possible, the reaction temperature is needed to be set to be below 150°C. In some embodiments provided by the present invention, the temperature of chemical modification in the closed high-pressure system, namely the target temperature, is specifically 125°C, 116°C or 130°C; in some embodiments provided by the present invention, the target time of chemical modification in the closed high-pressure system is specifically 6 h, 8 h or 6.5 h; when chemical modification is performed in the closed high-pressure system, the target pressure of chemical modification is preferably 0.07-1.9 MPa; the temperature rise rate in chemical modification is not specially limited in the present invention, and the temperature rise rate in chemical modification performed under normal pressure or in the closed high-pressure system can be specifically 0.2-5°C/min, more preferably 0.5-5°C/min. In some embodiments provided by the present invention, the temperature rise rate can be specifically 3°C/min, 2.5°C/min, 5°C/min, 2°C/min, 0.5°C/min or 0.2°C/min; when the temperature of the system reaches and is stabilized at the target temperature, the reaction in the closed high-pressure system is needed to maintain at the target temperature for 1-12 h or maintain at the target temperature for 24-72 h under normal pressure, and then cooling is started. Because the modified unidirectional veneer will recombine intermolecular hydrogen bonds in the cooling process and start crystallization at the same time, the cooling method may have a significant influence on the final performance. If the cooling rate is too high, the molecular chain of the unidirectional veneer with partial substances removed will be fixed too early, consequently, the intermolecular acting force is not completely established, resulting in low crystallinity and large crystalline particles, which all have negative effects on the performance. Therefore, in the present invention, after chemical modification is finished, the reaction liquid preferably exchanges heat with the external environment at room temperature to slowly cool the reaction liquid. This cooling mode can promote the establishment of intermolecular acting force so as to obtain crystals with high crystallinity and large grain size. Specifically, this mode includes one or more of water cooling, air cooling and wind cooling, and the further, specifically, this cooling mode includes indirect water cooling, air cooling or direct water cooling; the cooling rate is preferably 0.2-10°C/min, more preferably 1-10°C/min; and in some embodiments provided by the present invention, the cooling rate is specifically 0.2°C/min, 1°C/min, 0.5°C/min, 2°C/min or 3°C/min.

After the temperature is decreased to reach operation temperature (such as 60°C), the unidirectional veneer with partial substances removed is preferably washed and dried; specifically, the reactor is opened to take out the unidirectional veneer with partial substances removed, or the material frame loaded with the unidirectional veneer with partial substances removed is taken out. The obtained materials are put into water for washing wholly, or the material frame loaded with the materials is put into water for washing wholly. The washing is to remove chemical substances remained on the surface, and meanwhile, sodium cellulose which is possibly generated in the reaction process can react back to cellulose, so that pure natural chemical components can be kept in the wood. The washing processes can be carried out for a plurality of times according to the condition of the materials. After being washed, the materials are dried to obtain the unidirectional veneer with partial substances removed; the materials can be dried naturally or can be put into a drying oven to be dried in an accelerated manner; compared with the unidirectional veneer, the mass of the unidirectional veneer with partial substances removed is reduced by 10%-60%, further reduced by 35%-55%; and in some embodiments provided by the present invention, compared with the unidirectional veneer, the mass of the unidirectional veneer with partial substances removed is specifically reduced by 50%, 42%, 46.8%, 49.1%, 49% or 48.2%.

In the chemical modification process, the mass of unidirectional veneer is reduced by 10%-60%, thus a large number of clearances will be generated in the microstructure, and the unidirectional veneer with partial substances removed will have good plastic deformation capacity due to these clearances and can be easily compressed to be smaller under an external force. Moreover, the reduction of mass is caused by that a large amount of lignin and hemicellulose in the veneer are removed, and the proportion of cellulose is increased in the aspect of overall components. Because the cellulose in the three main components of the veneer has the best mechanical property, the material has the potential enhancement possibility by proportion adjustment. The plastic deformation capacity of wood without being modified is poor, and if the wood without being modified is subjected to remarkable plastic deformation, it is generally needed to carry out water vapor heating and humidifying treatment for 2-24 h to achieve sufficient softening effect. The shrinkage and densification process is a key process, it means that if the material is needed to meet the requirement for achieving the volume compression effect within a short time, the material is needed to have very good plastic deformation capacity, which is not achieved by the wood without being modified. Moreover, if the material subjected to chemical treatment is needed to be kept complete and flat, it is needed to control the reaction degree in the chemical reaction process. If the reaction is excessive, a large number of wrinkles will be generated on the veneer, consequently, levelling cannot be achieved; and if the reaction is insufficient, the compression degree of the veneer will be low, and consequently, the mechanical property of the densified material is poor.

In the present invention, the removal ratio of lignin is 20%-80% and the removal ratio of hemicellulose is 30%-80% after unidirectional veneer is chemically modified, and specifically, the removal ratio of the hemicellulose and the lignin is approximately in a positive correlation with the temperature and time within the temperature and time range of chemical modification provided by the present invention.

The unidirectional veneer with partial substances removed is subjected to shrinkage treatment in the at least one direction; the shrinkage treatment includes transverse shrinkage and thickness shrinkage according to force decomposition, and the transverse shrinkage and the thickness shrinkage mean that shrinkage will occur in both the transverse direction and thickness direction which are vertical to the fiber direction of the unidirectional wood fiber paper to achieve a densification effect. The number of times of the shrinkage treatment can be selected according to the direction of force, and the transverse (horizontal direction) shrinkage and the vertical (thickness direction) shrinkage can be actually realized only through the force decomposition.

In a specific embodiment provided by the present invention, the shrinkage treatment includes the transverse shrinkage treatment and the thickness shrinkage treatment, namely bidirectional shrinkage treatment; and the force of the transverse shrinkage treatment is intersected with the force of the thickness shrinkage treatment. The bidirectional shrinkage of the unidirectional wood fiber paper can be realized by different devices respectively, and the shrinkage in the two directions can also be simultaneously or alternately realized in one device.

When the thickness of the processed feedstock veneer is below 0.8 mm, transverse shrinkage is necessary. In a small thickness range, the arrangement density of the cellulose and the distribution of the lignin and the hemicellulose in the transverse direction of any position of the unidirectional veneer are not uniform, and the distribution of reaction media in chemical or biological treatment is relatively more uniform. If the cellulose in a certain area in the transverse direction is less, the lignin and the hemicellulose will be removed more, more connecting substances are inevitably lost in partial the area by chemical modification, and the cellulose structure of the area is in a falling apart state. The unidirectional shrinkage is carried out in the thickness direction, cracks are easily generated in the area due to the lack of necessary transverse connecting force.

According to the present invention, the transverse shrinkage treatment is preferably to apply an external mechanical force and/or perform dehydration spontaneous shrinkage in the transverse direction; and the external mechanical force applied in the transverse direction is in a direction intersected with the extending direction of wood fibers and/or fiber bundles of the unidirectional veneer with partial substances removed in the plane.

The method for applying the external mechanical force in the transverse direction is a method well known to those skilled in the art, there is no special limitations, and methods with parameters such as pressure meeting the process requirements are all available. For example, a film material that can perform transverse shrinkage is used and attached to the surface of unidirectional veneer with partial substances removed, and after pressure is applied, the film material is removed; when controlling the film material to perform transverse shrinkage, the friction force between the film and the surface of the unidirectional veneer with partial substances removed will lead to the transverse shrinkage of the unidirectional veneer with partial substances removed; in this process, the tension of the film material influences the transverse shrinkage degree, specifically, the tension of the film material is preferably controlled to achieve the equivalent transverse shrinkage pressure of 0.001-1.5 MPa, more preferably 0.01-1.5 MPa; optionally, the tension of the film material is controlled to achieve equivalent transverse shrinkage pressure of 0.001 MPa, 0.002 MPa, 0.005 MPa, 0.01 MPa, 0.05 MPa, 0.08 MPa, 0.1 MPa, 0.2 MPa, 0.5 MPa, 0.8 MPa, 1.0 MPa, 1.2 MPa, 1.4 MPa, 1.5 MPa or a range between any two of the above values; moreover, the friction force on the surface, away from the film material, of the unidirectional veneer with partial substances removed may also influence the transverse shrinkage of the unidirectional veneer with partial substances removed, and therefore the lower the roughness of the contact side of the surface, away from the film material, of the unidirectional veneer with partial substances removed is, the better the effect is; specifically, it preferably makes contact with the surface having roughness smaller than or equal to Ra6.3, and optionally, the roughness of the contact side is Ra0.0063, Ra0.025, Ra0.05, Ra0.1, Ra0.2, Ra0.4, Ra0.8, Ra1.6, Ra3.2 or Ra6.3; and in addition, the external mechanical force can also be achieved by mechanical force, such as roller rubbing, and direct pressure applying methods. The pressure of applying the external mechanical force in the transverse direction is preferably 0.001-1.5 MPa, more preferably 0.01-1.5 MPa; and optionally, the pressure of applying the external mechanical force in the transverse direction is 0.001 MPa, 0.002 MPa, 0.005 MPa, 0.01 MPa, 0.05 MPa, 0.08 MPa, 0.1 MPa, 0.2 MPa, 0.5 MPa, 0.8 MPa, 1.0 MPa, 1.2 MPa, 1.4 MPa, 1.5 MPa or a range between any two of the above values.

The transverse shrinkage can be implemented by spontaneous acting force in the unidirectional veneer with partial substances removed, namely dehydration and spontaneous shrinkage; thin wood fiber paper will be subjected to spontaneous transverse shrinkage during dehumidification, as shown in FIG. 7, FIG. 7 is a schematic diagram of sinking and shrinkage of a tube cavity of wood fiber paper pipe in spontaneous transverse shrinkage, its principle is that partial lignin and hemicellulose which support the tube cavity in the chemically treated unidirectional veneer with partial substances removed are removed, a large number of clearances are contained in the microstructure, and the clearances can be easily filled with water. In addition, because cellulose in the continuous veneer plays a role of a main component, and there are a large number of hydroxyl groups in the chemical structure of cellulose, and it is a hydrophilic material, water molecules are promoted to enter the clearances of the microstructure. During dehydration, water is removed from the clearances, the clearances will disappear due to capillary force, thus the distance between cellulose microfibers is rapidly reduced, and hydrogen bonds between the microfibers are reestablished; and the spontaneous transverse shrinkage effect is achieved by shrinkage of the structure and establishment of chemical bonds. Macroscopically, wrinkles are generated on the wood fiber paper, so the width in the transverse direction is reduced, and the compactness is increased.

In another embodiment provided by the present invention, applying the external mechanical force in the transverse direction is specifically to apply a negative pressure to the unidirectional veneer with partial substances removed; and the intensity of the negative pressure is smaller than or equal to one atmospheric pressure. Under the action of the negative pressure, the material will shrink and deform in the transverse direction, and thus the densification effect in the transverse direction is achieved. In this process, because the material is subjected to the negative pressure acting force in all directions, shrinkage and deformation will also occur in the thickness direction.

In the present invention, the transverse shrinkage can be carried out under a normal temperature condition or a high temperature condition; specifically, the temperature of transverse shrinkage treatment is preferably 15°C-150°C, more preferably 25°C-130°C; optionally, the temperature of the transverse shrinkage treatment is 20°C, 25°C, 30°C, 50°C, 70°C, 80°C, 90°C, 100°C, 110°C, 120°C, 130°C or a range between any two of the above values; the time of the transverse shrinkage treatment is preferably 1 s to 4 min; optionally, the time of the transverse shrinkage treatment is 1 s, 10 s, 30 s, 1 min, 2 min, 3 min, 4 min or a range between any two of the above values; the percentage of shrinkage of a unidirectional veneer feedstock subjected to the transverse shrinkage treatment is preferably 2%-40%; and optionally, the percentage of shrinkage of the transverse shrinkage treatment is 2%, 5%, 10%, 15%, 20%, 25%, 30%, 35%, 40% or a range between any two of the above values.

In a specific embodiment provided by the present invention, the transverse shrinkage treatment is specifically spontaneous transverse shrinkage, specifically, the unidirectional veneer with partial substances removed in a wet state is dried to spontaneously achieve the spontaneous transverse shrinkage effect, and after one-time or multi-time spontaneous transverse shrinkage, and the unidirectional veneer with partial substances removed is filled with water again, the transverse shrinkage in the direction vertical to the fiber direction is obvious, so that the transverse tensile property is improved.

A normal wood slab can be softened with steam and then subjected to hot-pressing compression densification, but in the densification process, it is needed to apply a large pressure to the wood slab for a long time; the veneer in the present invention is thin, and is prone to cracking when being directly subjected to hot pressing, so the obtained densification effect is limited. After the veneer is chemically modified, its mass will be decreased by 10%-60% and further reduced by 35%-55%, and a large number of cavities are formed inside. Because the removed chemical component is hydrophobic lignin, the hydrophilicity of the modified unidirectional veneer with partial substances removed is remarkably improved, the internal cavities can be rapidly filled with water molecules, thus the overall structure is soft, and densification is easily conducted through natural water loss; and moreover, the energy consumption in the densification process is low, the time is short, and batch production is facilitated.

In the process of spontaneous transverse shrinkage, external mechanical force is not needed at all, the modified unidirectional veneer with partial substances removed can realize the effect of spontaneous transverse shrinkage through the microstructure water filling-dewatering process, and this process is also called as wood keratinization. Its principle is that there are a large number of clearances in the microstructure of the chemically modified wood, and these clearances are easily filled with water. In addition, because cellulose in continuous veneer play a role of a main component, there are a large number of hydroxyl groups in the chemical structure of cellulose, and it is a hydrophilic material, water molecules are promoted to enter the clearances of the microstructure. In the water filling process, the clearances between cellulose microfibrils are obviously expanded. In the subsequent drying process, water will be removed from the clearances, the clearances will disappear due to capillary force, the distance between the cellulose microfibrils will be rapidly reduced, hydrogen bonds between the microfibrils will be reestablished, the effect of spontaneous transverse shrinkage, especially transverse shrinkage of the veneer vertical to the fiber in the axial direction, is achieved through shrinkage of the structure and establishment of chemical bonds, and the densification effect is more obvious.

According to the present invention, in the spontaneous transverse shrinkage process, the densification effect can be achieved completely by chemical and physical changes spontaneously generated by the modified unidirectional veneer with partial substances removed in the drying process without using any external pressure device. Specifically, the spontaneous transverse shrinkage is to dry the unidirectional veneer with partial substances removed in the wet state, that is, the spontaneous transverse shrinkage includes water filling treatment and dehydration treatment; the water filling treatment is to make the unidirectional veneer with partial substances removed in the wet state; the water filling treatment is to preferably make the water content reach 60-120 wt%; optionally, the water filling treatment makes the water content reach 60 wt%, 80 wt%, 100 wt%, 120 wt% or a range between any two of the above values; the dehydration treatment includes natural drying and/or heating drying; when the dehydration treatment is performed in the natural drying way in the environment, the environmental humidity in the natural drying is preferably less than 50% RH, otherwise, a large amount of water is still reserved in the structure of the unidirectional veneer with partial substances removed after drying; if the dehydration treatment is performed in the heating drying way, the time of the dehydration treatment can be reduced, the process time is decreased, and the unidirectional veneer with partial substances removed can be dried to reach the water content below 10 wt% to the maximum extent, so that the densification effect is improved; the dehydration treatment preferably makes the water content reach 2-20 wt%; in the present invention, there is no special requirement on the drying temperature and drying time in the spontaneous transverse shrinkage process, as long as the target water content is achieved finally. The process of spontaneous transverse shrinkage can be performed once, or repeated for 2-10 times, preferably 2-6 times. The process of repeated spontaneous transverse shrinkage is that after one time of spontaneous transverse shrinkage is finished, the unidirectional veneer with partial substances removed is refilled with water, and then the same spontaneous transverse shrinkage process is performed. The repeated spontaneous transverse shrinkage can make the material have a better densification effect because the spontaneous transverse shrinkage process is uncontrollable, intermolecular force in the unidirectional veneer structure with partial substances removed cannot be established perfectly after one time of spontaneous transverse shrinkage is finished. After one or more times of spontaneous transverse shrinkage, the unidirectional veneer with partial substances removed is refilled with water, the unidirectional veneer with partial substances removed vertical to the fiber direction will have certain shrinkage in the transverse width, and the transverse fiber bonding force is improved, which indicates that partial irreversible transverse shrinkage densification effect is realized.

According to the present invention, the thickness shrinkage treatment is to apply a mechanical pressure in the thickness direction, and the specific method is a method for applying an external mechanical pressure in the thickness direction of the chemically treated veneer to cause the shrinkage of the veneer in the thickness direction, moreover, methods with pressure and other parameters meeting the process requirements are basically avaliable, and the used devices include but not limited to a flat press, a plastic vacuum forming machine, a hot press roll, a cold press roll, a continuous flat press, a continuous belt press and the like; and by applying the external mechanical pressure, the flatness of the veneer is improved, and moreover, and the thickness is reduced under the action of force, and excessive water is pressed out, thus obtaining the flat and dense unidirectional wood fiber paper with the water content less than 30%. Moreover, the thickness shrinkage is performed on a single or stacked veneers; that is, the thickness shrinkage treatment can be performed on a single veneer or a plurality of stacked veneers, and the process efficiency is higher when the thickness shrinkage is performed on the plurality of stacked veneers. Due to the influence of the process, the number of the stacked veneers meets 2-20 veneers/pile, more preferably 3-20 veneers/pile. The pressure of thickness shrinkage treatment is preferably 0.01-80 MPa, more preferably 0.1-60 MPa, and still more preferably 3-10 MPa; optionally, the pressure of the thickness shrinkage treatment is 1 MPa, 2 MPa, 3 MPa, 4 MPa, 5 MPa, 6 MPa, 8 MPa, 10 MPa, 12 MPa, 15 MPa, 20 MPa, 25 MPa, 30 MPa, 35 MPa, 40 MPa, 45 MPa, 50 MPa, 55 MPa, 60 MPa or a range between any two of the above values; and according to a pressure and area calculation formula, under a condition that the required pressure is fixed, the more the number of the piles of the unidirectional veneer with partial substances removed is, the higher the gauge pressure of the flat press is. If the flat press is used, that the unidirectional veneer with partial substances removed is easily broken due to instant high pressure is to be taken into consideration, it is needed to slowly increase the pressure to reach the target pressure. The thickness shrinkage treatment can be carried out at normal temperature or high temperature, and the specific process temperature range is preferably 15-150°C, and more preferably 25-130°C; optionally, the temperature of the thickness shrinkage treatment is 15°C, 25°C, 35°C, 50°C, 80°C, 100°C, 120°C, 130°C, 150°C or a range between any two of the above values; in order to reduce the process cost, the time of the thickness shrinkage treatment is preferably 1s - 4 min; and optionally, the time of the thickness shrinkage treatment is 0.1 min, 0.5 min, 1 min, 2 min, 3 min, 4 min or a range between any two of the above values. The process time will be decreased at high temperature, but the device cost will also be increased.

In a specific embodiment provided by the present invention, the thickness shrinkage treatment is carried out by rolling; specifically, a pair of hot rolls which rotate oppositely is adopted for continuous hot pressing, as shown in FIG. 8, FIG. 8 is a schematic diagram of continuous hot pressing processing of a hot roll, in which, 6 is the unidirectional veneer with partial substances removed, and 7 is the pair of hot rolls which rotate oppositely; and the stress direction of the unidirectional wood fiber paper is not determined during rolling, but it is a transverse direction or a thickness direction according to force decomposition.

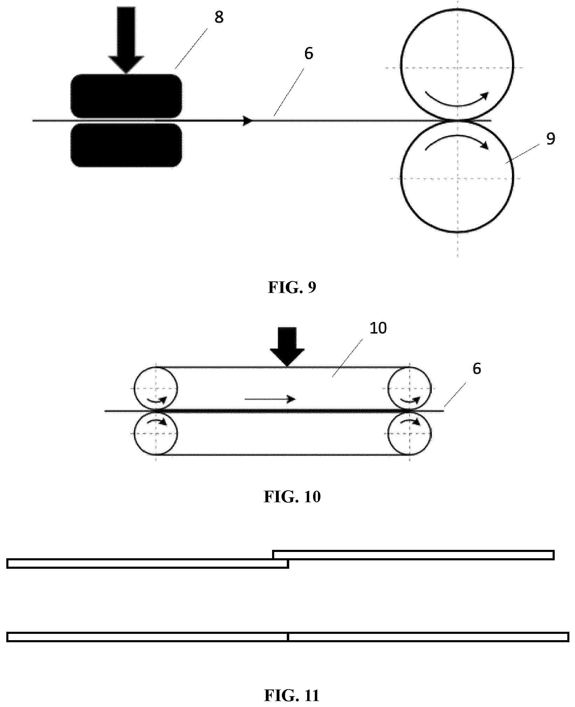

In a specific embodiment provided by the present invention, the thickness shrinkage treatment is carried out by continuous hot pressing through the continuous flat press, as shown in FIG. 9, FIG. 9 is a schematic diagram of continuous hot pressing processing of a continuous flat press, in which, 6 is the unidirectional veneer with partial substances removed, 8 is the flat press, and 9 is a driving roll.

In a specific embodiment provided by the present invention, the thickness shrinkage treatment is carried out by continuous hot pressing through the belt press, as shown in FIG. 10, FIG. 10 is a schematic diagram of continuous hot pressing processing of a belt press, in which, 6 is the unidirectional veneer with partial substances removed, and 10 is the belt press.

In the present invention, the transverse shrinkage treatment and the thickness shrinkage treatment may cause different process time and process times according to different used processes, can be carried out for multiple times, or for one time, can be alternately or simultaneously carried out, and finally, the running time and the running times of the target parameter design process are achieved.

The effect of bidirectional shrinkage treatment is mainly reflected in the reduction of the water content and the thickness of the unidirectional veneer with partial substances removed, and after the unidirectional veneer with partial substances removed is subjected to bidirectional shrinkage treatment, the thickness of the veneer feedstock will be reduced; the thickness of the veneer subjected to bidirectional shrinkage treatment is preferably 15%-80% of the thickness of the unidirectional veneer; and the water content of the veneer cleaned and soaked after chemical modification is preferably reduced to be less than 30% after bidirectional shrinkage treatment, and more preferably reduced to be 20%-30%.

In the present invention, the unidirectional wood fiber paper is dense in the thickness direction and the transverse (width) direction through the external or spontaneous physical effect by the bidirectional shrinkage process. By transverse shrinkage, the transverse binding force and the compactness of the unidirectional wood fiber paper can be increased, and transverse cracking of the unidirectional wood fiber paper is avoided; by thickness shrinkage, the compactness of the unidirectional wood fiber paper can be increased, and the performance of the unidirectional wood fiber paper is improved; and through the simultaneous or sequential shrinkage effect in the two directions, the performance of the unidirectional wood fiber paper can be greatly improved. Further, in cooperation with temperature control, rapid shrinkage and densification and rapid dehydration of the unidirectional wood fiber paper can be achieved at the same time, and wrinkles and transverse cracks are avoided. The bidirectional shrinkage process provided by the present invention can be generally completed within 5 min, so the process efficiency is high.

In a specific embodiment provided by the present invention, the thickness shrinkage includes hot-pressing treatment under a negative pressure condition; the thickness shrinkage as well as the levelling and dehydration of the unidirectional wood fiber paper can be simultaneously implemented by the hot-pressing treatment under the negative pressure condition; the pressure of the hot-pressing treatment is preferably 0.1-60 MPa, more preferably 0.1-15 MPa; optionally, the pressure of the hot-pressing treatment is 0.01 MPa, 0.05 MPa, 0.1 MPa, 0.5 MPa, 1 MPa, 5 MPa, 10 MPa, 15 MPa, 20 MPa, 25 MPa, 30 MPa, 35 MPa, 40 MPa, 45 MPa, 50 MPa, 55 MPa, 60 MPa or a range between any two of the above values; the flow in the negative pressure condition is preferably 50-500 L/min; optionally, the flow in the negative pressure condition is 50 L/min, 80 L/min, 100 L/min, 150 L/min, 200 L/min, 250 L/min, 300 L/min or a range between any two of the above values; the temperature of the hot-pressing treatment is preferably 50°C-150°C; optionally, the temperature of the hot-pressing treatment is 50°C, 80°C, 100°C, 120°C, 130°C, 150°C or a range between any two of the above values; the time of the hot-pressing treatment is preferably 0.5-20 min; and optionally, the time of the hot-pressing treatment is 0.5 min, 1 min, 2 min, 3 min, 4 min, 5 min, 8 min, 10 min, 12 min, 15 min, 18 min, 20 min or a range between any two of the above values. If the thickness shrinkage treatment is realized only by the hot-pressing treatment under the negative pressure condition, the pressure is low, consequently, more time is needed.

In the present invention, according to requirement for the size of the unidirectional wood fiber paper, splicing is carried out before or after bidirectional shrinkage treatment. The flatness of the wood fiber paper subjected to bidirectional shrinkage treatment is improved, and the water content is reduced. However, due to the size limitation of the veneer feedstock, the veneer in chemical treatment is discontinuous, and in order to meet the use requirement, it is needed to connect the wood fiber paper to achieve different sizes. During use, it can be cut according to actual requirements, then used for preparing products of different sizes; for the whole size, it can be spliced to be infinite in width and length theoretically, the length of the unidirectional wood fiber paper in splicing is preferably 0.1-5 m, and the width is preferably 0.01-1 m. In the present invention, the splicing can be performed on two or a plurality of pieces of unidirectional wood fiber paper, as long as the size of the spliced wood fiber paper meets the requirement; the splicing is specifically to mark splicing contours on the unidirectional veneer with partial substances removed or the wood fiber paper subjected to bidirectional shrinkage treatment, and then splice the corresponding parts; more specifically, before splicing, splicing parts are designed on the unidirectional veneers with partial substances removed and to be spliced or the wood fiber paper subjected to shrinkage treatment and to be spliced, it is mainly to mark related splicing contours, then some splicing technologies are applied to connect the plurality of pieces of scattered unidirectional veneers with partial substances removed or the wood fiber paper subjected to shrinkage treatment to form a piece of large-size unidirectional wood fiber paper; and after splicing, the thickness of the wood fiber paper at the spliced position is about 0.08-0.12 mm.

In the present invention, the unidirectional wood fiber paper can be spliced in a partial region stacking manner, as shown in the upper part in FIG. 11, it can also be spliced in a region-free stacking manner, as shown in the lower part in FIG. 11.

In the present invention, the splicing process can be one or more of: glue splicing, glue line seam splicing, wet extrusion splicing and film covering splicing.

In a specific embodiment provided by the present invention, the glue splicing can be adopted, specifically, glue is coated on an stacking partial one unidirectional veneer with partial substances removed and to be spliced or one piece of wood fiber paper subjected to shrinkage treatment and to be spliced, and then the stacking parts of the other unidirectional veneer with partial substances removed or the other piece of wood fiber paper subjected to shrinkage treatment are pressed on the stacking part coated with the glue, thus the stacking parts of two unidirectional veneers with partial substances removed or two pieces of wood fiber paper subjected to shrinkage treatment are spliced after the glue is cured, and the size of the continuous wood fiber paper is increased. Because the stacking parts are the thicknesses of the two unidirectional veneer with partial substances removed or the two pieces of wood fiber paper subjected to shrinkage treatment, and are thicker than other parts; and pressure can be applied to the stacking parts, so as to reduce the thicknesses of the stacking parts, and improve the thickness uniformity of the whole wood fiber paper.

In a specific embodiment provided by the present invention, the glue line seam splicing can be adopted, specifically, the contour shapes of the unidirectional veneer with partial substances removed and to be spliced or the wood fiber paper subjected to shrinkage treatment and to be spliced are designed to be completely fitted with each other, the contours of two unidirectional veneers with partial substances removed and to be spliced or two pieces of wood fiber paper subjected to shrinkage treatment and to be spliced are fitted with each other, and then glue lines move back and forth along two fitted contour lines; the glue lines are stuck with the surface of the unidirectional wood fiber paper, the glue lines are continuous so that the positions of the two unidirectional veneers with partial substances removed or the two pieces of wood fiber paper subjected to shrinkage treatment are fixed, and thus the purpose of splicing the unidirectional wood fiber paper is realized. **In** order to improve the firmness of splicing, on one hand, the number of the glue lines on the two unidirectional veneers with partial substances removed or the two pieces of wood fiber paper subjected to shrinkage treatment can be increased in the seam splicing process; on the other hand, both sides of the unidirectional veneer with partial substances removed or the wood fiber paper subjected to shrinkage treatment can be subjected to seam splicing. The glue line seam splicing has the advantages that there are no stacking parts of two pieces of unidirectional wood fiber paper in the seam splicing process, and the size of the wood fiber paper can be increased only by fitting the contours, so that the thickness of the seam splicing partial the wood fiber paper is basically the same as that of other parts.

**In** a specific embodiment provided by the present invention, the wet extrusion splicing can be adopted, specifically, the wet extrusion splicing mode is similar to the glue splicing mode, but glue is not suitable, and only water is used. Water is applied to the stacking parts of the unidirectional veneer with partial substances removed and to be spliced or the wood fiber paper subjected to shrinkage treatment and to be spliced until the stacking parts are wetted thoroughly and then unexpanded together, a large pressure (≥5 MPa) is applied, and heating and drying are carried out till the unidirectional wood fiber paper is dried and then attached together, thus achieving the purpose of splicing. The unidirectional veneer with partial substances removed or the wood fiber paper subjected shrinkage treatment in the wet state is soft in structure; under the action of large pressure, the structures of two unidirectional veneers with partial substances removed or two pieces of wood fiber paper subjected to shrinkage treatment can be tightly pressed together and bonded to each other till hydrogen bond are bonded, the pressure is kept till the unidirectional wood fiber paper is dried, and therefore the bonding force is fixed, and splicing is finished. The wet extrusion splicing mode has the advantages that the pure natural attribute of the wood fiber paper is well kept, wood fiber paper of any size and breadth can be easily manufactured, and after film covering/pre-impregnating is conducted in the later procedure, a continuous prepreg of infinite sizes can be produced theoretically.

In a specific embodiment provided by the present invention, the film covering splicing can be adopted, specifically, a continuous glue film is selected according to the needed large size, then pieces of small-size unidirectional wood fiber paper are pressed on the glue film, and all the pieces of small-size unidirectional wood fiber paper are spliced together through the connection of the glue film, thus achieving the purpose of increasing the size. The type of the glue film can be selected according to needs, the mode that a thin mat is mixed with glue can also be selected for self-manufacturing, and its principle is that a layer of film is added to connect the pieces of small-size unidirectional wood fiber paper, and the continuous prepreg of infinite sizes can also be produced theoretically by this method.

According to the present invention, the thickness shrinkage treatment does not include the hot-pressing treatment under the negative pressure condition; further to perform levelling treatment after shrinkage treatment, to obtain the unidirectional wood fiber paper.

Through the levelling treatment, the unidirectional veneer subjected to shrinkage treatment can be dehydrated more efficiently and quickly, and good flatness can be achieved in the dehydration process, and then the unidirectional wood fiber paper can be obtained; and the levelling effect is mainly reflected in quickly and efficiently improving the flatness of the unidirectional wood fiber paper and reducing the water content, and then dry and flat unidirectional wood fiber paper is obtained.

According to the present invention, further, specifically, the water content of the obtained unidirectional wood fiber paper can be less than or equal to 10 wt% by the levelling treatment.

According to the present invention, exhaust channels are arranged on two contact surface or a single contact surface of the unidirectional wood fiber paper during levelling treatment. Specifically, it can be realized by various forms of devices such as a heatable negative pressure film press, and a vacuum hot press, for example, the vacuum hot press provided with a plurality of exhaust channels. The levelling process is characterized in that heating can be performed in the processing process, and double surfaces or the single surface of the pressed unidirectional wood fiber paper can be directly provided with the exhaust channels, so that water vapor can be discharged. Generally, the pressure in the levelling process will be obviously lower than the pressure in thickness shrinkage, and the pressure is too high, so the discharge speed of the water vapor will be reduced, and the levelling efficiency will be reduced. When the levelling process is adopted, the pressure is selected to meet the purpose of preventing the unidirectional wood fiber paper from wrinkles in the drying process. The pressure in the levelling treatment can be 0.01-2 MPa; optionally, the pressure of the levelling treatment is 0.01 MPa, 0.05 MPa, 0.1 MPa, 0.5 MPa, 1 MPa, 1.5 MPa, 2 MPa or a range between any two of the above values; the heating temperature of the levelling treatment is 40°C-150°C; and optionally, the heating temperature of the levelling treatment is 40°C, 50°C, 70°C, 80°C, 100°C, 120°C, 150°C or a range between any two of the above values. By reasonably arranging the exhaust channels on the contact surfaces of the unidirectional wood fiber paper, the levelling can be finished within 0.1-4 min; and optionally, the time of the levelling treatment is 0.1 min, 0.5 min, 1 min, 2 min, 3 min, 4 min or a range between any two of the above values.

According to the present invention, the wood fiber paper composite includes the unidirectional wood fiber paper and the second resin layer combined with the surface of the unidirectional wood fiber paper; the preparation method for the wood fiber paper composite includes: transferring a diluted second resin feedstock to the surface of the unidirectional wood fiber paper, and curing to obtain the wood fiber paper composite; the second resin feedstock is preferably one or more of a monomer of the second resin, a precursor of the second resin and the second resin; the solid content of the diluted second resin feedstock is preferably 1%-40%, and more preferably 3%-30%; the second resin layer with low areal density can be obtained by increasing the dilution ratio; in some embodiments provided by the present invention, the solid content of the diluted second resin feedstock is specifically 11.7% or 6.8%; the transfer method is a method well known to those skilled in the art, and it can be performed in a dipping transfer or spraying or sprinkling way; after the diluted second resin feedstock is transferred to the surface of the unidirectional wood fiber paper, a solvent will be volatilized to make the second resin feedstock form a film, and then the film is cured under the curing condition, so as to obtain the second resin layer; the second resin feedstock can be a monomer micromolecule, and specifically is a monomer micromolecule of the thermosetting resin or a monomer micromolecule of the thermoplastic resin; after the second resin layer is combined with the surface of the unidirectional wood fiber paper, the monomer micromolecule is cured under the curing condition; the second resin can be the thermosetting resin or the thermoplastic resin; the solvent for dilution can be selected according to the type of the second resin, for example, the solvent for water-soluble dilution is water; and the curing condition is selected according to the type of the feedstock.

In a specific embodiment provided by the present invention, the wood fiber paper composite is prepared by a rolling pressing method, including the following steps: uniformly spraying the diluted second resin feedstock on the surface of unidirectional wood fiber paper; placing the unidirectional wood fiber paper in parallel and in a mutual stacking way according to the required width; volatilizing most of solvent in the diluted second resin feedstock by a method of drying in a drying tunnel at a certain temperature or airing; passing through hot-pressing double rolls at a certain temperature, in which, drying is implemented by the hot-pressing rolls by heating and pressing, and the surface flatness is ensured. Rolling pressing is carried out for 2 to 3 times to obtain the wood fiber paper composite containing the second resin layer. After the second resin layer is added, the areal density of the wood fiber paper composite is improved by 3-40 g/m² compared with that of the unidirectional wood fiber paper.

According to the present invention, the wood fiber paper composite includes the unidirectional wood fiber paper, the second resin layer and the fiber reinforced layer which are combined with the surface of the unidirectional wood fiber paper, and preferably, the second resin layer and the fiber reinforced layer are attached to two surfaces of the unidirectional wood fiber paper in sequence; the preparation method for the wood fiber paper composite includes: transferring the diluted second resin feedstock to the surface of the unidirectional wood fiber paper, covering with a film by the fiber reinforced layer, and curing to obtain the wood fiber paper composite; the diluted second resin feedstock is the same as the above, and is not listed herein; and a material for film covering is preferably a solid film material, which is adhered to the surface of the unidirectional wood fiber paper by the second resin feedstock, so that a crosslinking effect on the unidirectional wood fiber paper is achieved. The material for film covering is a material with low areal density, which can be surface layer materials with low aeral density and excellent mechanical property such as a carbon fiber surface mat or a glass fiber surface mat.

In a specific embodiment provided by the present invention, the wood fiber paper composite is prepared by the rolling pressing method, including: uniformly spraying the diluted second resin feedstock to the surface of unidirectional wood fiber paper, placing the unidirectional wood fiber paper in parallel and in a mutual stacking manner according to the required width, covering with a film by the fiber reinforced layer by a film covering process, volatilizing most of solvent in the diluted second resin feedstock by the method of drying in the drying tunnel at a certain temperature or airing; and passing through the hot-pressing double rolls at a certain temperature, in which, drying is implemented by the hot-pressing rolls by heating and pressing, and the surface flatness is ensured. Rolling pressing is carried out for 2 to 3 times to obtain the wood fiber paper composite containing the second resin layer and the fiber reinforced layer. After the second resin layer and the fiber reinforced layer are combined, the areal density of the wood fiber paper composite is improved by 10-50 g/m² compared with that of the unidirectional wood fiber paper.

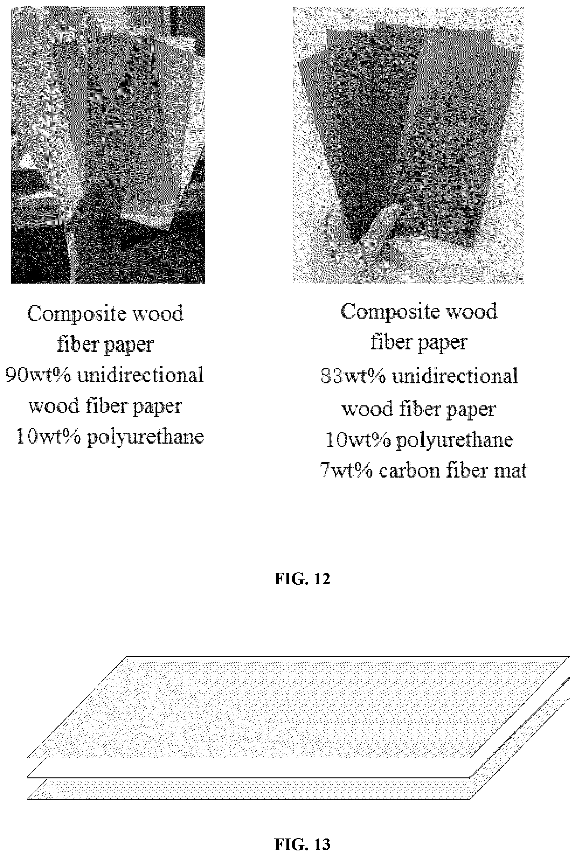

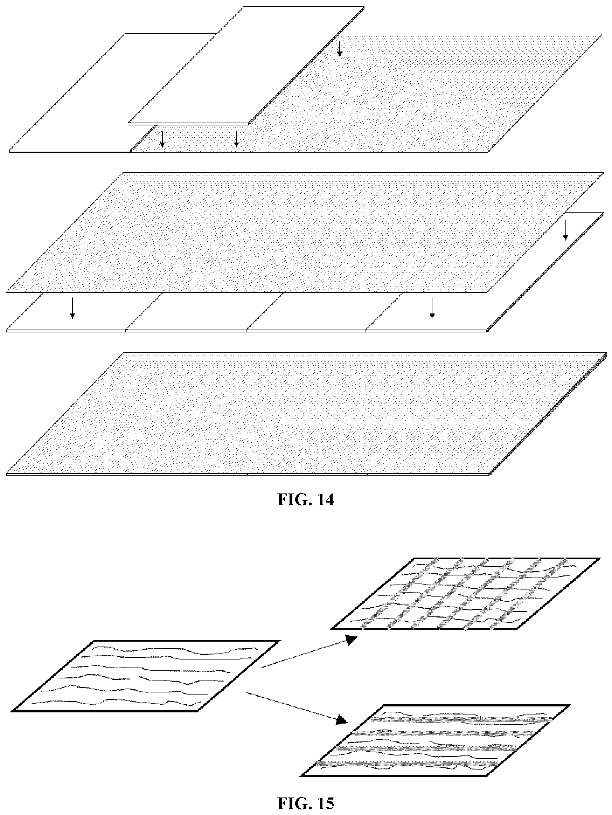

With reference to FIG. 12, FIG. 12 is an object diagram of different wood fiber paper composite; with reference to FIG. 13, FIG. 13 is a structural schematic diagram of wood fiber paper composite; and with reference to FIG. 14, FIG. 14 is a schematic diagram of splicing of unidirectional wood fiber paper by a film covering layer.

Wood is a highly anisotropic material, and its mechanical property in the direction parallel to the fiber direction is significantly superior to that in the direction vertical to the fiber direction. The crosslinking combining process is to enhance the mechanical property in the direction vertical to the fiber direction, thus the stability of the subsequent process can be improved, and the mechanical property of the finally prepared wood honeycomb can be improved. According to the method provided by the present invention, the low-density resin layer and the film covering layer are combined with the unidirectional wood fiber paper, and the second resin layer and the fiber reinforced layer play a role in connecting wood fibers, it is similar to crosslinking the wood fibers.

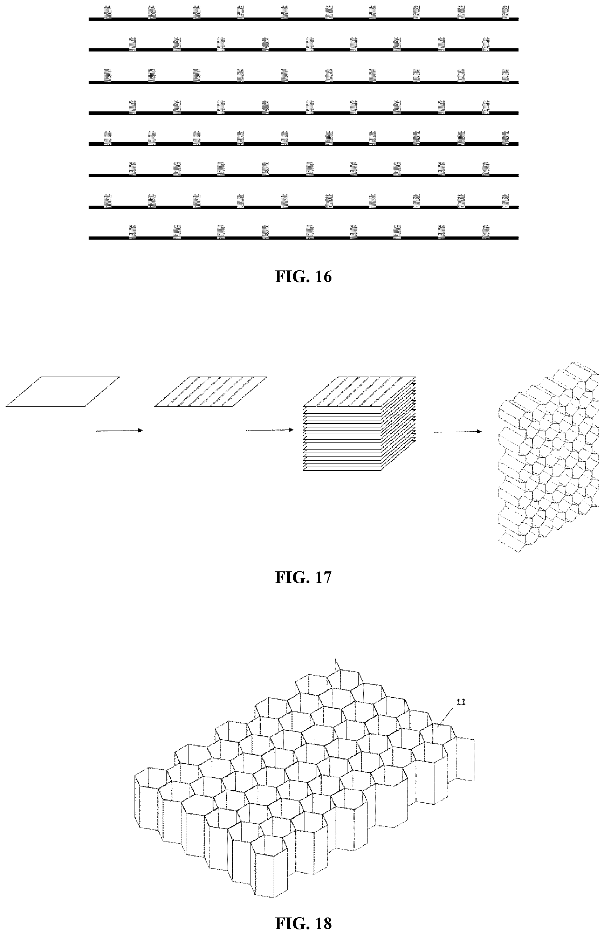

The plurality of pieces of wood fiber paper are coated with the adhesive, then are unexpanded in a staggered manner, and subjected to hot-pressing and curing to obtain the unexpanded honeycomb core block; specifically, specified positions on the surfaces of the plurality of pieces of wood fiber paper are coated with the adhesive, then the plurality of pieces of wood fiber paper are unexpanded, and subjected to hot pressing to cure the adhesive so as to bond the plurality of pieces of wood fiber paper into a whole, thus obtaining the unexpanded honeycomb core block; the honeycomb can form the hole structure by staggering and expanding bonding areas of paper adjacent in upper and lower; the effect of glue coating and paper stacking is mainly reflected in that the overall thickness is increased, and the final pore size of the honeycomb is finally determined by the number of paper contained in one unexpanded honeycomb core block and the staggering distance between the adhesive. With reference to FIG. 15, FIG. 15 is a schematic diagram of two glue coating directions during coating wood fiber paper composite with adhesive, the left figure is the wood fiber paper before glue coating, the right figure is the wood fiber paper after glue coating, the upper right shows that the direction of the adhesive is vertical to the main direction of fibers, and the lower right shows that the direction of the adhesive is parallel to the main direction of the fibers; and with reference to FIG. 16, FIG. 16 is a schematic diagram of a glue applying position of a adhesive on wood fiber paper provided by the present invention, and the adhesive on the adjacent wood fiber paper is staggered.

**In** a specific implementation mode provided by the present invention, the adhesive coating process can be specifically a silk screen printing method (1), a double-roll transfer printing method (2) or a flat sheet transfer printing mode (3); the processes can transfer the adhesive with certain width and thickness onto the wood fiber paper according to a certain uniform step pitch, and good parallelism is also ensured; the adhesive has no epitaxy and burrs; and the adhesive can be one of epoxy resin, acrylic resin and other resin.

Further, specifically, the silk screen printing method is that: according to the designed cell size of the honeycomb, silk screens with the proper mesh number are selected to determine the depth of a glue tape, the step pitch of the glue tape is designed, and the width meets the requirement of the cell size of the honeycomb. According to the designed honeycomb size, wood fiber paper with a certain length and width is cut, the adhesive is transferred to the wood fiber paper in a scraping and coating manner by a silk-screen printing machine; then, a plurality of pieces of wood fiber paper are continuously bonded in a staggered manner to an unexpanded honeycomb core block; and during stacking the paper, the glue tapes of the wood fiber paper in the odd-number layers and the glue tapes of the wood fiber paper in the odd-number layers are unexpanded, and the glue tapes of the wood fiber paper in the even-number layer and the glue tapes of the wood fiber paper in the even-number layer are unexpanded.

Further, specifically, the double-roll transfer printing method is that: according to the designed cell size of the honeycomb, a plate roller with the proper diameter is selected, and the step pitch, the width and the depth of a groove in the plate roller are designed; the other smooth-face roller is soaked in the adhesive, the adhesive is attached to the grooved roller by rotation of the double rolls, a scraper is used in cooperation for removing resin on the surface of the grooved roller, and only the adhesive in the groove is left; the wood fiber paper with the certain length and width passes through a clearance between the grooved roller and the other smooth-face roller, and thus the adhesive in the grooved roller is transferred to the surface of the wood fiber paper; then, the plurality of pieces of wood fiber paper coated with the adhesive are continuously bonded in a staggered manner to obtain the unexpanded honeycomb core block; and the glue tapes of the wood fiber paper in the odd-number layers and the glue tapes of the wood fiber paper in the odd-number layers are unexpanded, and the glue tapes of the wood fiber paper in the even-number layer and the glue tapes of the wood fiber paper in the even-number layer are unexpanded.

Further, specifically, the flat sheet transfer printing method is that: according to the designed cell size of the honeycomb, wood fiber paper with the certain length and width is cut, a plurality of columns of transfer printing planes with parallel protruded strips are designed according to the size of the wood fiber paper, in which, the width and the step pitch of the protruded strips are matched with the designed honeycomb model. During glue coating, protruded parts make contact with the liquid level of the adhesive by a certain depth, and then, a certain force is applied to transfer the resin taken from the protruded parts onto the wood fiber paper; after the action is repeated multiple times, the plurality of pieces of wood fiber paper are continuously bonded in a staggered manner to obtain the unexpanded honeycomb core block; and the glue tapes of the wood fiber paper in the odd-number layers and the glue tapes of the wood fiber paper in the odd-number layers are unexpanded, and the glue tapes of the wood fiber paper in the even-number layer and the glue tapes of the wood fiber paper in the even-number layer are unexpanded.

According to the present invention, before expanding, ear bands are adhered to two ends of the unexpanded honeycomb core block, fixed on a expanding device and then expanded to obtain a white wood honeycomb; the expanding can be directly carried out to reach a target length or expanded to 1/3-1/2 of the target length; and a regular hole structure can be formed by expanding. **In** the previous process, paper is only adhered in a local area, so a non-adhered area can be unfolded under the action of expanding force, so as to form a honeycomb structure. With reference to FIG. 17, FIG. 17 is a schematic diagram of a preparation flow of a white wood honeycomb.

According to the present invention, the first resin is transferred to the surface of the white wood honeycomb, cured and shaped to obtain the wood honeycomb; and the resin coating has the functions of shaping the honeycomb and improving the density so as to improve the mechanical property. The feedstock of the first resin can be a macromolecular precursor or a monomer micromolecule, preferably one or more of epoxy resin, phenolic resin, unsaturated polyester resin, furfuryl alcohol resin and other resin; the method for transferring the first resin is a method well known to those skilled in the art, there is no special limitation, and it can be selected according to the type of the first resin; if the viscosity of the resin is relatively low, the first resin can be uniformly coated on the honeycomb structure of the white wood honeycomb by repeating several times of dip coating processes; and if the viscosity of the resin is relatively high, the resin can be spray-coated, shower-coated and dip-coated into honeycomb through holes of the white wood honeycomb, and then the first resin is uniformly coated on the honeycomb structure after the plain honeycomb is expanded and pressed.

**In** a specific embodiment provided by the present invention, the first resin is low-viscosity resin, and the first resin is transferred onto the plain honeycomb for multiple times and cured and shaped for multiple times, so as to form the wood honeycomb; the multiple times of curing and shaping are performed between two times of transferring, and the last step is curing and shaping; the transferring method is selected from one or more of dip coating, shower coating and spraying; and further, specifically, the first resin is subjected to dip coating, shower coating or spraying on the first resin to the plain honeycomb for multiple times and subjected to curing for multiple times (before dip coating, shower coating or spraying each time), so as to obtain the wood honeycomb.

**In** a specific embodiment provided by the present invention, the resin is low-viscosity resin, and step S3) specifically includes: transferring the plain honeycomb into a drying oven for drying so as to remove water; then immersing the plain honeycomb into the first resin for a certain time; lifting the plain honeycomb to flow away redundant first resin; curing at the curing temperature of the first resin; and repeating the glue immersing and curing process for multiple times after curing is completed until the target density of the wood honeycomb is reached. The method is suitable for glue coating of wood honeycombs with low density to high densities.

In a specific embodiment provided by the present invention, the first resin is high-viscosity resin, and step S3) of transferring the resin to the plain honeycomb specifically includes the following steps: spray - coating, shower-coating or dip-coating the first resin into the honeycomb through holes of the plain honeycomb, and then uniformly coating the first resin on the plain honeycomb after expanding and pressing.

In another specific embodiment provided by the present invention, the resin is high-viscosity resin. Step S3) specifically includes: uniformly transferring the first resin to honeycomb through hole walls of the plain honeycomb which is expanded to be 1/3-1/2 of a target length by any method of spray-coating, shower-coating and dip coating; then starting the expanding device to return till the honeycomb hole walls are in contact; applying a certain force, and pressing two surfaces of the ear bands of the unexpanded honeycomb core block so as to press out the redundant first resin from honeycomb cells; repeating a series of actions of expanding, returning and pressing for 3-4 times to uniformly coat the honeycomb hole walls with quantitative resin until reaching the target density of the honeycomb; then starting the expanding device again to slowly expand the unexpanded honeycomb core block to a certain length so as to form a structure with a regular hexagonal inner cavity; and finally, curing at the curing temperature of the first resin. The method is suitable for gluing of wood honeycombs with medium and low densities.

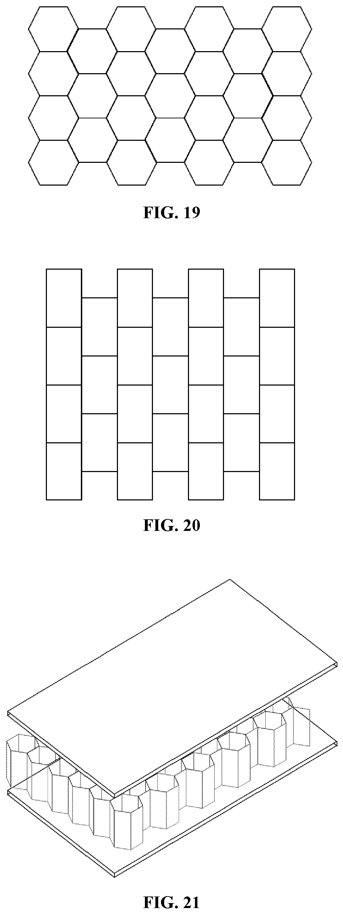

With reference to FIG. 18, FIG. 18 is a structural schematic diagram of a wood honeycomb provided by the present invention, in which, 11 is a cell structure; with reference to FIG. 19, FIG 19 is a top view of a wood honeycomb provided by the present invention, and the cell of the wood honeycomb is hexagonal; and with reference to FIG. 20, FIG. 20 is a top view of a wood honeycomb provided by the present invention, and the cell of the wood honeycomb is quadrilateral.

The core material wood fiber paper of the wood honeycomb provided by the present invention is a natural environment-friendly material, particularly, the components of the unidirectional wood fiber paper are all wood, most components of the wood fiber paper composite are wood, and the mechanical properties in the direction parallel to the wood fiber and the direction vertical to the wood fiber are excellent, so that the obtained wood honeycomb is excellent in mechanical property, light in weight, low in cost and environmentally friendly.

The present invention further provides a wood honeycomb component, and the wood honeycomb component includes the abovementioned wood honeycomb; and with reference to FIG. 21, FIG. 21 is a schematic diagram of a sandwich structure of a wood honeycomb component provided by the present invention.

The present invention further provides use of the wood honeycomb or the wood fiber paper composite in preparing one or more of building materials, furniture materials, sports equipment, static carriers, vehicles and aircrafts.

In the present invention, unless particularly specified, the pressure refers to the pressure borne by the unidirectional veneer and the unidirectional wood fiber paper.

In order to further describe the present invention, the wood honeycomb and the preparation method therefor provided by the present invention are described in detail in combination with the following embodiments below.

The reagents used in the following embodiments are commercially available; PU solution used in embodiment: Shenzhen JiTian Chemical F0409; Epoxy resin: Yituo composite material YTCC302; Epoxy structural adhesive: Shanghai Haiying SK-2012; PO hot melt adhesive: Xingxia hot melt adhesive film XJO115; PA hot melt adhesive: Xingxia hot melt adhesive film XWA116; Acrylic: 3 m-AD118; Phenolic resin: Sumitomo PR-43204.

### Preparation of unidirectional wood fiber paper/wood fiber paper composite:

### Example 1

### 1) Chemical treatment

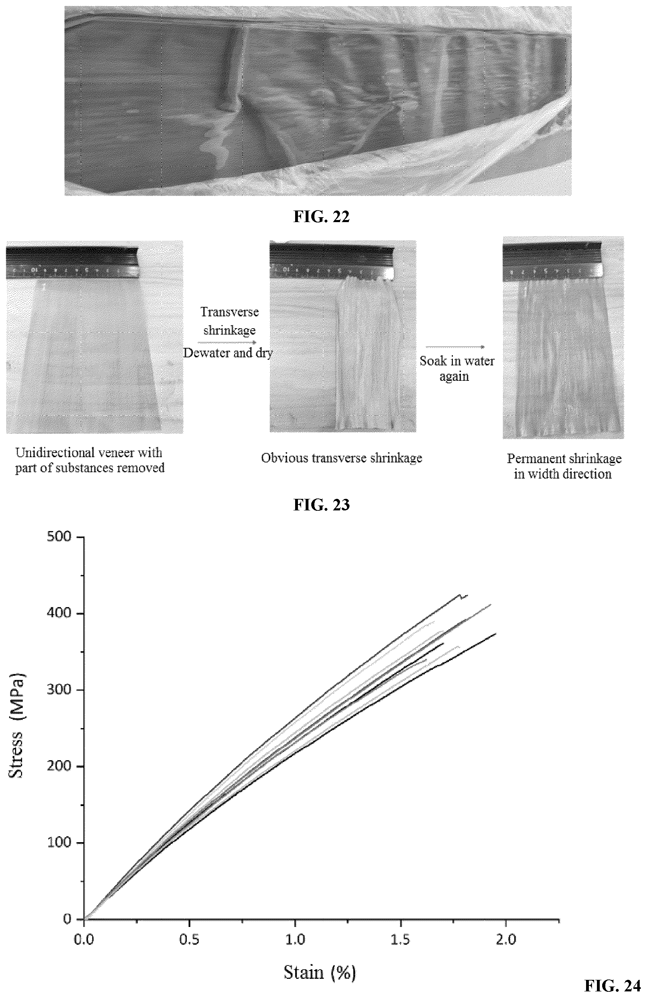

A reaction solution was prepared firstly, and the total solution volume was 100 L. A reactor was a vertical reactor (externally connected to a circulating pump), and a material frame of the vertical reactor provided by the present invention was used for loading a unidirectional veneer for chemical treatment. Sodium hydroxide and sodium sulfite were dissolved in water, the concentration of sodium hydroxide in the reaction solution was 100 g/L, the concentration of sodium sulfite was 50 g/L, and the pH of the reaction solution was 14. Then, the reaction solution and a unidirectional basswood veneer with the thickness of 0.28 mm were put into the reactor according to the material ratio of 0.49 m²/L, the reactor was heated to 125°C to make the whole internal system in a high-pressure state; then, after the target temperature was kept at high temperature under high pressure for 6 h, the temperature was decreased until entering a normal temperature and normal pressure state of the internal system, then, the reactor was opened, the unidirectional veneer with partial substances removed was taken out and washed with water, and thus finishing the chemical modification process; and as shown in FIG. 22, FIG. 22 is a photo of a unidirectional veneer with partial substances removed in a wet state. The mass of the finally-obtained unidirectional veneer with partial substances removed was reduced by 50%.

### 2) Spontaneous transverse shrinkage

One unidirectional veneer with partial substances removed obtained in step 1) was prepared, and the width of the veneer was 10 cm. The veneer was placed in a drying oven to be heated to 80°C, the veneer was in a dry state after 2-3 min, and had obvious transverse shrinkage in the direction vertical to fiber direction, the apparent width was reduced by 50%, and the veneer obviously wrinkled. The width could not be completely recovered after the veneer was soaked in water and expanded again, which indicated that a partial irreversible transverse shrinkage effect was achieved; and as shown in FIG. 23, FIG. 23 is a diagram of spontaneous transverse shrinkage of a unidirectional veneer with partial substances removed.

### 3) Shrinkage and levelling treatment in thickness direction

The veneer (the thickness of a feedstock was about 0.28 mm) subjected to transverse shrinkage in step 2) was shrunk in the thickness direction by a vacuum hot press in a wet state, the pressure was 6 MPa, the compression time was 0.5 min, and the temperature was 110°C. The pressure was needed to be slowly raised in the compression process, thus preventing the veneer from being crushed due to excessive impact. The compression direction was vertical to the thickness direction of veneer fibers. Because most of hemicellulose and lignin were removed by chemical modification in step 1), a pore structure of the wood was fully opened, hydroxyl groups on the surface of hydrophilic cellulose were induced to form new hydrogen bonds in the water infiltration-extrusion process, and therefore adjacent wood fibers were tightly combined, and a dense veneer with the mechanical property greatly enhanced was obtained. The thickness of the veneer shrunk in the thickness direction was reduced to be about 0.08 mm, and the water content was 20%. Then negative pressure and extra positive pressure (the pressure in the thickness direction of the wood fiber paper was about 0.5 MPa) were started, the flow was about 150 L/min, the temperature was still 110°C, the process was kept for 4 min, and then dry and flat unidirectional wood fiber paper was obtained, cracks were hardly generated basically and the probability was 5% or below, and the average thickness of the unidirectional wood fiber paper was 0.08 mm. According to a flatness testing method described in the specification, the wood fiber paper was placed between two smooth and flat glass plates, a small pressure of about 4500 Pa was applied to the surfaces of the glass, and a clearance between the glass plates was measured to range from 0.15-0.2mm (the glass plates were not completely flat, so the clearance was the maximum value of the apparent thickness of the highest point and the lowest point of the wood fiber paper). The average water content was 4%, and the final width was reduced by about 30% compared with that of the wet veneer after chemical treatment. A mechanical tensile test was carried out based on a plastic tensile test standard GB/T1040.1-2006, the width of a wood fiber paper sample strip was 4 mm, the tensile rate was 2 mm/min, and a tensile curve was obtained as shown in FIG. 24, FIG. 24 is a curve diagram of a tensile stress strain test in a fiber direction of unidirectional wood fiber paper; and as shown in FIG. 24, the average breaking strength of the unidirectional wood fiber paper is 381 MPa, the average elasticity modulus is 32 GPa, the tensile strength in the direction vertical to the fibers is 8.7 MPa, and the tensile modulus is 1.74 GPa.

### Contrast Example 1

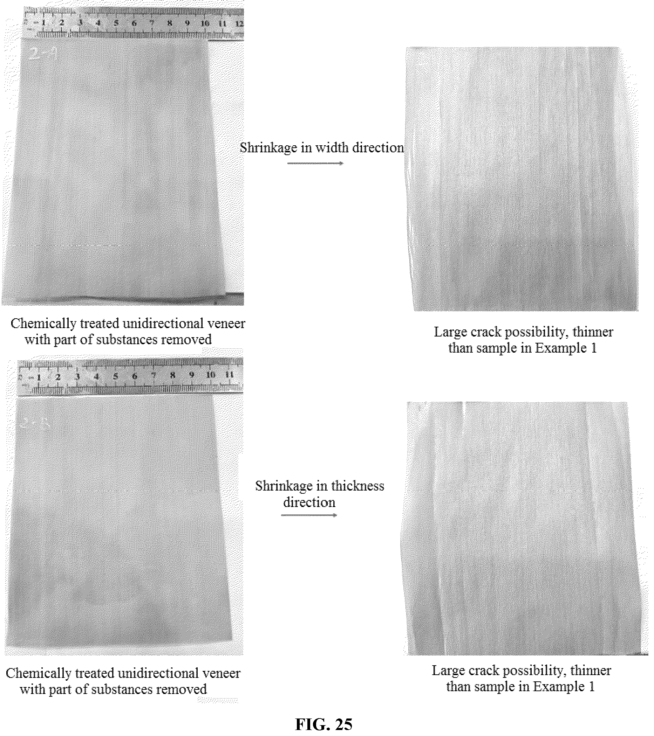

The chemical treatment was the same as that in the Example 1. Transverse shrinkage procedure was not carried out, a wet veneer (with the width being 10 cm) after chemical treatment was directly subjected to shrinkage in the thickness direction through a vacuum hot press, the pressure was still 6 MPa, and the compression time was 0.5 min. The same as that in the Example 2, the negative pressure and extra positive pressure (the pressure in the thickness direction of the unidirectional wood fiber paper was about 0.5 MPa) were started, the flow was about 150 L/min, the temperature was still 110°C, and the process was kept for 4 min. The press was opened and cracks appeared on partial the unidirectional wood fiber paper, the occurrence probability was about 40%, the average thickness was 0.07 mm and was smaller than that of a veneer subjected to transverse shrinkage, the width was basically not changed, as shown in FIG. 25, FIG. 25 is an object diagram of a veneer only shrinking in a thickness direction after chemical treatment. A mechanical tensile test was carried out, and the obtained tensile properties of the unidirectional wood fiber paper were that: the average tensile strength in the fiber direction was 348 MPa, and the average tensile modulus was 30 GPa; and the tensile strength in the direction vertical to the fiber direction was 4.8 MPa, and the tensile modulus was 1.1 GPa.

For the same batch and specification of unidirectional wood fiber paper, the average parameters and performance of the unidirectional wood fiber paper obtained in the Example 1 and the Contrast Example 1 are shown in Table 1.

**Table 1 Average parameters and performance of unidirectional wood fiber paper**

| | | Width shrinkage | Thickness shrinkage | Strength in fiber direction | Modulus in fiber direction | Strength in direction vertical to fiber direction | Modulus in direction vertical to fiber direction |
|---|---|---|---|---|---|---|---|
| Example 1 | Spontaneous transverse shrinkage | ~30% | ~72% | 381 MPa | 32GPa | 8.7MPa | 1.7GPa |
| Contrast Example 1 | No transverse shrinkage | Basically not | ~75% | 348MPa | 30 GPa | 4.8MPa | 1.1GPa |

### Example 2

The chemical treatment was the same as that of the Example 1, different modes were adopted for transverse shrinkage, and the thickness compression mode was the same: the unidirectional wood fiber paper was placed on a smooth metal table top having the surface roughness of Ra1.6, and a cover plate was placed on the smooth metal table top. The cover plate was prepared by a pre-tensioned silica gel soft film, the tensioning force was in a direction vertical to the fiber direction of the unidirectional wood fiber paper, and the tightness degree was adjustable. About 0.5 MPa pressure was applied to the cover plate to tightly attach the silica soft gel to the unidirectional wood fiber paper to generate pressure, and in the process of releasing the tensioning force of the silica gel soft film, the unidirectional wood fiber paper was subjected to transverse shrinkage under the action of friction force. In this example, the tension of the silica gel soft film is controlled to achieve the equivalent shrinkage pressure of 0.002 MPa, 0.2 MPa and 1.2 MPa. The obtained thickness percentage of shrinkage and the transverse percentage of shrinkage of the unidirectional wood fiber paper in the contrast example were tested, then the tensile mechanical property was tested, and the results are shown in Table 2.

**Table 2 Average parameters and performance of unidirectional wood fiber paper**

| | | Width shrinkage | Thickness shrinkage | Strength in fiber direction | Modulus in fiber direction | Strength in direction vertical to fiber direction | Modulus in direction vertical to fiber direction |
|---|---|---|---|---|---|---|---|
| Example 1 | Spontaneous transverse shrinkage | ~30% | ~72% | 381 MPa | 32GPa | 8.7MPa | 1.7GPa |
| Example 2 | 0.002MPa | ~3% | ~75% | 375 MPa | 31GPa | 5.0 MPa | 1.2GPa |
| Example 2 | 0.2MPa | ~32% | ~70% | 394MPa | 33GPa | 8.9MPa | 1.8GPa |
| Example 2 | 1.2MPa | ~38% | ~65% | 405 MPa | 32GPa | 10.8MPa | 2.1GPa |

### Example 3

The chemical treatment and transverse shrinkage mode were completely consistent with those of the Example 1, and a rolling pressing method was adopted for thickness compression. The effect of adjusting the pressure in the thickness direction could be achieved by adjusting the clearance between rolls, as shown in FIG. 8. In the rolling pressing process, the unidirectional wood fiber paper born a resultant force composed of the pressure and the friction force in the thickness direction, and the resultant force is in the direction shown by the dotted line in the figure. The component force (pressure) in the thickness direction could make the unidirectional wood fiber paper have a good shrinkage effect. In the contrast example, the last clearance between the rolls was set to be 0.07 mm, and the average thickness of the compressed unidirectional wood fiber paper was 0.08 mm. The tensile property of the unidirectional wood fiber paper was tested, and the result is shown in Table 3.

**Table 3 Average parameters and performance of unidirectional wood fiber paper obtained by different thickness shrinkage modes**

| | | Width shrinkage | Thickness shrinkage | Strength in fiber direction | Modulus in fiber direction | Strength in direction vertical to fiber direction | Modulus in direction vertical to fiber direction |
|---|---|---|---|---|---|---|---|
| Example 1 | | ~30% | ~72% | 381 MPa | 32GPa | 8.7MPa | 1.7GPa |
| Example 3 | Rolling pressing shrinkage | ~31% | ~71% | 390 MPa | 33GPa | 8.5 MPa | 1.8GPa |

By comparing the pressure influence in thickness shrinkage, a veneer feedstock with the same specification as that of the Example 1 was selected, the chemical treatment, the transverse shrinkage mode and the thickness shrinkage mode were completely consistent with those in the Example 1, and the only difference was that the pressure in thickness shrinkage was 0.02 MPa as compared with 6 MPa in the Example 2. In addition, in order to compare the thickness shrinkage effect under larger pressure, a unidirectional veneer with the same specification was selected, the chemical treatment and the transverse shrinkage were the same as those in the Example 1, larger pressure of 18 MPa was adopted in thickness compression, then a vacuum press provided with an exhaust channel was used for levelling the wood fiber paper, and the levelling parameters were as follows: the pressure was 0.2 MPa, the temperature was 110°C, the flow of a vacuum air pump was about 150 L/min, and it was started for 1 min. All parameters of the unidirectional wood fiber paper obtained in the above procedures are shown in the Table 4.

**Table 4 Average parameters and performance of unidirectional wood fiber paper obtained in different thickness shrinkage conditions**

| | Pressure in thickness shrinkage | Width shrinkage | Thickness shrinkage | Strength in fiber direction | Modulus in fiber direction | Strength in direction vertical to fiber direction | Modulus in direction vertical to fiber direction |
|---|---|---|---|---|---|---|---|
| Example 1 | 6MPa | ~30% | ~72% | 381 MPa | 32GPa | 8.7MPa | 1.7GPa |
| Example 3 | 0.02MPa | ~31% | ~28% | 155 MPa | 22GPa | 7.7MPa | 1.5 GPa |
| Example 3 | 18MPa | ~30% | ~83% | 850 MPa | 75 GPa | 9.2MPa | 2.0 GPa |

### Example 4

The chemical treatment was the same as that of the Example 1, the same thickness compression mode was carried out, and the transverse shrinkage mode was the same as that of the Example 2. The difference was that thickness compression was carried out, and then was transverse shrinkage, and the specific details are described above. The unidirectional wood fiber paper with excellent performance could be obtained by the mode of firstly carrying out thickness shrinkage, and the performance detection result is shown in Table 5.

**Table 5 Average parameters and performance of unidirectional wood fiber paper**

| | | Width shrinkage | Thickness shrinkage | Strength in fiber direction | Modulus in fiber direction | Strength in direction vertical to fiber direction | Modulus in direction vertical to fiber direction |
|---|---|---|---|---|---|---|---|
| Example 4 | Thickness shrinkage first, transverse shrinkage second | 19% | 73% | 375 MPa | 32GPa | 6.5 MPa | 1.6GPa |

The chemical treatment in Examples 5-9 was different from that in the Example 1, and other processes were the same.

### Example 5

A reaction solution was prepared firstly, and the total solution volume was 20 L. A reactor was a vertical reactor, and a unidirectional veneer could be directly placed close to the wall of a bottle for reaction. Sodium hydroxide and sodium sulfite were dissolved into water, the concentration of the sodium hydroxide in the reaction solution was 100 g/L, the concentration of the sodium sulfite was 50 g/L, and the pH of the reaction solution was 14. Then, the reaction solution and a unidirectional basswood veneer with the thickness of 0.28 mm were put into the reactor according to the material ratio of 0.29 m²/L, the reactor was heated to 125°C to make the whole internal system in a high-pressure state; then, after the target temperature was kept at high temperature under high pressure for 6 h, the temperature was decreased until entering a normal temperature and normal pressure state of the internal system, then, the reactor was opened, the unidirectional veneer with partial substances removed was taken out and washed with water, and thus finishing the chemical modification process. The mass of the finally-obtained unidirectional veneer with partial substances removed was reduced by 42.0%.

### Example 6

A reaction solution was prepared firstly, and the total solution volume was 100 L. A reactor was a vertical reactor (externally connected to a circulating pump), and a material frame of the vertical reactor provided by the present invention was used for loading a unidirectional veneer for chemical treatment. Sodium hydroxide and sodium sulfite were dissolved in water, the concentration of sodium hydroxide in the reaction solution was 100 g/L, the concentration of sodium sulfite was 50 g/L, and the pH of the reaction solution was 14. Then, the reaction solution and a unidirectional basswood veneer with the thickness of 0.28 mm were put into the reactor according to the material ratio of 0.12 m²/L, the reactor was heated to 125°C to make the whole internal system in a high-pressure state; then, after the target temperature was kept at high temperature under high pressure for 4 h, the temperature was decreased until entering a normal temperature and normal pressure state of the internal system, then, the reactor was opened, the unidirectional veneer with partial substances removed was taken out and washed with water, and thus finishing the chemical modification process. The mass of the finally-obtained unidirectional veneer with partial substances removed was reduced by 46.8%.

### Example 7

A reaction solution was prepared firstly, and the total solution volume was 100 L. A reactor was a vertical reactor (externally connected to a circulating pump), and a material frame of the vertical reactor provided by the present invention was used for loading a unidirectional veneer for chemical treatment. Sodium hydroxide and sodium sulfite were dissolved in water, the concentration of sodium hydroxide in the reaction solution was 100 g/L, the concentration of sodium sulfite was 50 g/L, and the pH of the reaction solution was 14. Then, the reaction solution and a unidirectional basswood veneer with the thickness of 0.28 mm were put into the reactor according to the material ratio of 0.12 m²/L, the reactor was heated to 125°C to make the whole internal system in a high-pressure state; then, after the target temperature was kept at high temperature under high pressure for 5 h, the temperature was decreased until entering a normal temperature and normal pressure state of the internal system, then, the reactor was opened, the unidirectional veneer with partial substances removed was taken out and washed with water, and thus finishing the chemical modification process. The mass of the finally-obtained unidirectional veneer with partial substances removed was reduced by 49.1%.

### Example 8

A reaction solution was prepared firstly, and the total solution volume was 3 tons. A reactor was a vertical reactor (externally connected to a circulating pump), and a material frame of the vertical reactor provided by the present invention was used for loading a unidirectional veneer for chemical treatment. Sodium hydroxide and sodium sulfite were dissolved in water, the concentration of sodium hydroxide in the reaction solution was 100 g/L, the concentration of sodium sulfite was 50 g/L, and the pH of the reaction solution was 14. Then, the reaction solution and a unidirectional basswood veneer with the thickness of 0.28 mm were put into the reactor according to the material ratio of 0.25 m²/L, the reactor was heated to 125°C to make the whole internal system in a high-pressure state; then, after the target temperature was kept at high temperature under high pressure for 5 h, the temperature was decreased until entering a normal temperature and normal pressure state of the internal system, then, the reactor was opened, the unidirectional veneer with partial substances removed was taken out and washed with water, and thus finishing the chemical modification process. The mass of the finally-obtained unidirectional veneer with partial substances removed was reduced by 49.0%.

### Example 9

A reaction solution was prepared firstly, and the total solution volume was 3 tons. A reactor was a vertical reactor (externally connected to a circulating pump), and a material frame of the vertical reactor provided by the present invention was used for loading a unidirectional veneer for chemical treatment. Sodium hydroxide and sodium sulfite were dissolved in water, the concentration of sodium hydroxide in the reaction solution was 100 g/L, the concentration of sodium sulfite was 50 g/L, and the pH of the reaction solution was 14. Then, the reaction solution and a unidirectional basswood veneer with the thickness of 0.28 mm were put into the reactor according to the material ratio of 0.37 m²/L, the reactor was heated to 125°C to make the whole internal system in a high-pressure state; then, after the target temperature was kept at high temperature under high pressure for 5 h, the temperature was decreased until entering a normal temperature and normal pressure state of the internal system, then, the reactor was opened, the unidirectional veneer with partial substances removed was taken out and washed with water, and thus finishing the chemical modification process. The mass of the finally-obtained unidirectional veneer with partial substances removed was reduced by 48.2%.

The unidirectional veneers with partial substances removed obtained in the Examples 5-9 were subjected to follow-up treatment according to a method in the Example 1, so as to obtain the unidirectional wood fiber paper, and the tensile property of the unidirectional wood fiber paper in the fiber direction of the unidirectional wood fiber paper was detected, and the obtained result is shown in Table 6.

**Table 6 Performance detection result of unidirectional fiber paper obtained in Examples 6-10**

| Examples | Mass decrease after reaction (%) | Tensile strength of wood paper (MPa) | Young's modulus of wood paper (GPa) |
|---|---|---|---|
| 5 | 42.0 | 349 | 30 |
| 6 | 46.8 | 371 | 31 |
| 7 | 49.1 | 380 | 33 |
| 8 | 49.0 | 368 | 32 |
| 9 | 48.2 | 411 | 34 |

### Example 10

A preparation method for wood fiber paper specifically included the following steps:
preparing a unidirectional basswood veneer with the thickness of 0.25 mm and the areal density of 102 g/m², and a chemical treatment solution containing 10% by concentration of alkaline substance, mixing sodium hydroxide and sodium sulfite with a ratio of 2:1 to prepare a solution suitable for a 30L reactor, and carrying out chemical treatment according to the process conditions of 125°C and 5 h to obtain a unidirectional veneer with partial substances removed and having weight loss of 43%;
placing the cleaned unidirectional veneer with partial substances removed in a drying oven for drying at 100°C for 30 min, then soaking in water for 5 min, then drying in the drying oven again at 100°C for 30 min, and repeating soaking and drying for three times to realize self-densification of the unidirectional veneer with partial substances removed; then densifying the veneer filled with water again by a cold press, in which, the pressure intensity was 6 MPa, and the compression time was 1 min; and
levelling the densified veneer with 75% alcohol, then placing on a plastic vacuum forming machine, heating at 120°C, and applying a certain negative pressure (the flow rate of about 150 L/min) to discharge residual water in the densified veneer, so as to obtain the unidirectional wood fiber paper with the areal density of 66 g/m².

### Example 11

A preparation method for wood fiber paper composite specifically included the following steps:
preparing a unidirectional basswood veneer with the thickness of 0.25 mm and the areal density of 102 g/m², and a chemical treatment solution containing 11% by concentration of alkaline substance, mixing sodium hydroxide and sodium sulfite with a ratio of 2:1 to prepare a solution suitable for a 100L reactor, and carrying out chemical treatment according to the process conditions of 125°C and 6 h to obtain a unidirectional veneer with partial substances removed and having weight loss of 47%;
placing the cleaned unidirectional veneer with partial substances removed in a drying oven for drying at 100°C for 30 min, then soaking in water for 5 min, then drying in the drying oven again at 100°C for 30 min, and repeating soaking and drying twice to realize self-densification of the unidirectional veneer with partial substances removed; then densifying the veneer filled with water again by a cold press, in which, the pressure intensity was 10 MPa, and the compression time was 30 s; and
soaking the densified veneer into a water-based PU solution with the solid content of 6.8% for 3 min, then taking out the densified veneer and levelling, heating at 100°C, applying a certain negative pressure (the flow of about 150 L/min) to discharge the residual water in the densified veneer to obtain the wood fiber paper composite, in which, the water content of the wood fiber paper composite was reduced to 9%, and the areal density was 68 g/m².

### Example 12

A preparation method for wood fiber paper composite specifically included the following steps:
preparing a unidirectional basswood veneer with the thickness of 0.25 mm and the areal density of 102 g/m², and a chemical treatment solution containing 9.5% by concentration of alkaline substance, mixing sodium hydroxide and sodium sulfite with a ratio of 2:1 to prepare a solution suitable for a 3 tons reactor, and carrying out chemical treatment according to the process conditions of 125°C and 6 h to obtain a unidirectional veneer with partial substances removed and having weight loss of 43%;
placing a cleaned unidirectional veneer with partial substances removed in an environment at room temperature, carrying out self-densification and water filling twice, then feeding into continuous hot-press roll at 130°C according to a principle that each pile included five layers, in which, the thickness was gradually reduced after passing through each hot-press roll; and after five times of rolling, finishing the densification process of the unidirectional veneer with partial substances removed; and
soaking the densified veneer into a water-based PU solution with the solid content of 11.7% for 3 min, then taking out the densified veneer and airing for 30 min, adjusting hot-press double rolls to reach temperature of 120°C, and then feeding the densified veneer soaked in PU into the double rolls three times to obtain the wood fiber paper composite, in which, the water content of the wood fiber paper composite was reduced to 9%, and the areal density was 80 g/m².

### Example 13

A preparation method for wood fiber paper composite specifically included the following steps:
preparing a unidirectional basswood veneer with the thickness of 0.25 mm and the areal density of 102 g/m², and a chemical treatment solution containing 9% by concentration of alkaline substance, mixing sodium hydroxide and sodium sulfite with a ratio of 2.1:1 to prepare a solution suitable for a 100L reactor, and carrying out chemical treatment according to the process conditions of 125 °C and 4 h to obtain a unidirectional veneer with partial substances removed and having weight loss of 40%;
placing a cleaned unidirectional veneer with partial substances removed in an environment at room temperature, carrying out self-densification and water filling three times, then placing on a flat press according to a principle that each pile included 20 layers, heating to reach 100°C, performing hot pressing according to a hot pressing process at 12 MPa for 3 min, in which, the water was pressed out and partially evaporated into air after the process is finished; and repeating the process three times to finish the densification process;
soaking the densified veneer into a water-based PU solution with the solid content of 22% for 5 min, then taking out the densified veneer and airing for 30 min, adjusting hot-press double rolls to reach temperature of 120°C, and then feeding the densified veneer into the double rolls three times to obtain the wood fiber paper composite, in which, the water content of the wood fiber paper composite was reduced to 9%, and the areal density was 115 g/m².

### Example 14

A preparation method for wood fiber paper composite specifically included the following steps:
preparing a unidirectional basswood veneer with the thickness of 0.25 mm and the areal density of 102 g/m², and a chemical treatment solution containing 11% by concentration of alkaline substance, mixing sodium hydroxide and sodium sulfite with a ratio of 2:1 to prepare a solution suitable for a 100L reactor, and carrying out chemical treatment according to the process conditions of 125°C and 4 h to obtain a unidirectional veneer with partial substances removed and having weight loss of 47%;
placing a cleaned unidirectional veneer with partial substances removed in an environment at room temperature, carrying out self-densification and water filling twice, then placing on a cold press according to a principle that each pile included 20 layers, performing cold pressing according to a hot pressing process at 10 MPa for 3 min under room temperature, and then finishing the densification process;
uniformly spraying an aqueous solution of a PU precursor with the solid content of 6.8% to two surfaces of the densified veneer, then covering the two surfaces of the densified veneer with 8 g/m² of carbon fiber surface mats through a film covering process, passing through a drying tunnel at 80°C, then passing through hot-press double rolls at 120°C, and carrying out rolling for 2-3 times to obtain the wood fiber paper composite with the areal density of 78 g/m².

### Example 15

A preparation method for wood fiber paper composite specifically included the following steps:
preparing a unidirectional basswood veneer with the thickness of 0.25 mm and the areal density of 102 g/m², and a chemical treatment solution containing 9% by concentration of alkaline substance, mixing sodium hydroxide and sodium sulfite with a ratio of 2:1 to prepare a solution suitable for a 500L reactor, and carrying out chemical treatment according to the process conditions of 125°C and 6 h to obtain a unidirectional veneer with partial substances removed and having weight loss of 47%;
placing a cleaned unidirectional veneer with partial substances removed in an environment at room temperature, carrying out self-densification and water filling twice, then placing on a cold press according to a principle that each pile included 20 layers, performing cold pressing according to a cold pressing process at 10 MPa for 3 min, and then finishing the densification process;
uniformly spraying an aqueous solution of a PU precursor with the solid content of 11.7% to two surfaces of the densified veneer, then covering the two surfaces of the densified veneer with 10 g/m² of carbon fiber surface mats through a coating process, passing through a drying tunnel at 80°C, then passing through hot-press double rolls at 120°C, and carrying out rolling for 2-3 times to obtain the wood fiber paper composite with the areal density of 84 g/m².

The performance test results of the wood fiber paper and the wood fiber paper composite prepared according to the method in the examples are shown in the following Table 7.

**Table 7: Performance parameters of wood fiber paper or wood fiber paper composite in corresponding examples**

| Examples | Type of paper | Transverse tensile strength (KN/m) | Transverse tensile modulus (KN/m) | Longitudinal tensile strength (KN/m) | Longitudinal tensile modulus (KN/m) |
|---|---|---|---|---|---|
| | | GB/T 12914-2008 | | | |
| 10 | Unidirectional wood fiber paper 66 g/m² | 0.323 | 0.513 | 14.168 | 3.281 |
| 11 | Wood fiber paper composite (PU added) 68 g/m² | 0.656 | 1.025 | 13.473 | 6.174 |
| 12 | Wood fiber paper composite (PU added) 80 g/m² | 0.852 | 1.047 | 15.382 | 17.518 |
| 13 | Wood fiber paper composite (PU added) 115 g/m² | 0.936 | 1.396 | 17.103 | 17.140 |
| 14 | Wood fiber paper composite (PU added + Carbon fiber mats on two surfaces) 78 g/m² | 2.384 | 1.096 | 16.876 | 7.419 |
| 15 | Wood fiber paper composite (PU added + Carbon fiber mats on two surfaces) 84 g/m² | 2.604 | 0.65 | 18.67 | 6.224 |

### Preparation of wood honeycomb:

### Example 16

A preparation method for a wood honeycomb specifically included the following steps:
preparing PO glue as adhesive, coating the adhesive on unidirectional wood fiber paper prepared in the Example 10 by a double-roll transfer printing method, and preparing adhering ear bands of an unexpanded honeycomb plate in a staggered stacking manner after glue coating;
placing the unexpanded honeycomb plate in a drying oven, placing a weight less than 10 kg, bonding for 5 min at 90°C, and cutting off the edge with excessive glue after bonding. The orientation of the wood fibers was vertical to the height direction of the honeycomb;
penetrating a contact pin through the ear bands and then fixing on a expander, then slowly expanding to reach the length of 200 mm, uniformly filling the prepared epoxy resin into honeycomb cells, starting a return and extrusion device on the expander, controlling the extrusion force and repeating the expanding and extrusion actions for three times to uniformly distribute the quantitative epoxy resin on the honeycomb hole walls, and then expanding the honeycomb cells to a state meeting the regular hexagon requirement;
integrally placing the honeycomb and the frame into the drying oven for curing at 80°C for 60 min; and
trimming the prepared wood honeycomb to finish the preparation. The side length of each cell of the wood honeycomb was 5.5 mm, the size was 500x500x300 mm, and the density was 56 kg/m³.

### Example 17

A preparation method for a wood honeycomb specifically included the following steps:
preparing PO glue as adhesive, coating the adhesive on unidirectional wood fiber paper with areal density of 66 g/m² prepared in the Example 10 by a double-roll transfer printing method, and preparing adhering ear bands of an unexpanded honeycomb plate in a staggered stacking manner after glue coating;
placing the unexpanded honeycomb plate in a drying oven, placing a weight, bonding for 5 min at 90°C, and cutting off the edge with excessive glue after bonding. The orientation of the wood fibers was vertical to the height direction of the honeycomb;
penetrating a contact pin through the ear bands and then fixing on a expander, then slowly expanding to reach the length of 200 mm, uniformly filling the prepared epoxy resin into honeycomb cells, starting a return and extrusion device on the expander, controlling the extrusion force and repeating the expanding and extrusion actions twice to uniformly distribute the quantitative epoxy resin on the honeycomb hole walls, and then expanding the honeycomb cells to a state meeting the regular hexagon requirement;
integrally placing the honeycomb and the frame into the drying oven for curing at 80°C for 60 min; and
trimming the prepared wood honeycomb to finish the preparation. The side length of each cell of the wood honeycomb was 5.5 mm, the size was 500x500x500 mm, and the density was 128 kg/m³.

### Example 18

A preparation method for a wood honeycomb specifically included the following steps:
preparing PO glue as adhesive, coating the adhesive on unidirectional wood fiber paper with areal density of 66 g/m² prepared in the Example 10 by a double-roll transfer printing method, and preparing adhering ear bands of an unexpanded honeycomb plate in a staggered stacking manner after glue coating;
placing the unexpanded honeycomb plate in a drying oven, placing a weight, bonding for 5 min at 90°C, and cutting off the edge with excessive glue after bonding. The orientation of the wood fibers was vertical to the height direction of the honeycomb;
penetrating a contact pin through the ear bands and then fixing on a expander, then slowly expanding to reach the length of 200 mm, uniformly filling the prepared unsaturated polyester resin into honeycomb cells, starting a return and extrusion device on the expander, controlling the extrusion force and repeating the expanding and extrusion actions for three times to uniformly distribute the quantitative polyester resin on the honeycomb hole walls, and then expanding the honeycomb cells to a state meeting the regular hexagon requirement;
integrally placing the honeycomb and the frame into the drying oven for curing at 80°C for 60 min; and
trimming the prepared wood honeycomb to finish the preparation. The side length of each cell of the wood honeycomb was 5.5 mm, the size was 500x500x300 mm, and the density was 48 kg/m³.

### Example 19

A preparation method for a wood honeycomb specifically included the following steps:
preparing PO glue as adhesive, coating the adhesive on unidirectional wood fiber paper with areal density of 66 g/m² prepared in the Example 10 by a double-roll transfer printing method, and preparing adhering ear bands of an unexpanded honeycomb plate in a staggered stacking manner after glue coating;
placing the unexpanded honeycomb plate in a drying oven, placing a weight, bonding for 5 min at 90°C, and cutting off the edge with excessive glue after bonding. The orientation of the wood fibers was vertical to the height direction of the honeycomb;
penetrating a contact pin through the ear bands and then fixing on a expander, then slowly expanding to reach the length of 500 mm, uniformly filling the prepared epoxy resin into honeycomb cells, starting a return and extrusion device on the expander, controlling the extrusion force and repeating the expanding and extrusion actions for three times to uniformly distribute the quantitative epoxy resin on the honeycomb hole walls, and then expanding the honeycomb cells to a state meeting the regular hexagon requirement;
integrally placing the honeycomb and the frame into the drying oven for curing at 80°C for 60 min; and
trimming the prepared wood honeycomb to finish the preparation. The side length of each cell of the wood honeycomb was 5.5 mm, the size was 1000x1000x1000 mm, and the density was 56 kg/m³.

### Example 20

A preparation method for a wood honeycomb specifically included the following steps:
preparing PA glue as adhesive, coating the adhesive on unidirectional wood fiber paper with areal density of 66 g/m² prepared in the Example 10 by a double-roll transfer printing method, and preparing adhering ear bands of an unexpanded honeycomb plate in a staggered stacking manner after glue coating;
placing the unexpanded honeycomb plate in a drying oven, placing a weight, bonding for 10 min at 120°C, and cutting off the edge with excessive glue after bonding. The orientation of the wood fibers was vertical to the height direction of the honeycomb;
penetrating a contact pin through the ear bands and then fixing on a expander, then slowly expanding to reach the length of 500 mm, uniformly filling the prepared acrylic resin into honeycomb cells, starting a return and extrusion device on the expander, controlling the extrusion force and repeating the expanding and extrusion actions for three times to uniformly distribute the quantitative acrylic resin on the honeycomb hole walls, and then expanding the honeycomb cells to a state meeting the regular hexagon requirement;
integrally placing the honeycomb and the frame into the drying oven for curing at 60°C for 90 min; and
trimming the prepared wood honeycomb to finish the preparation. The side length of each cell of the wood honeycomb was 5.5 mm, the size was 1000x1000x500 mm, and the density was 64 kg/m³.

### Example 21

A preparation method for a wood honeycomb specifically included the following steps:
preparing PO glue as adhesive, coating the adhesive on unidirectional wood fiber paper with areal density of 66 g/m² prepared in the Example 10 by a double-roll transfer printing method, and preparing adhering ear bands of an unexpanded honeycomb plate in a staggered stacking manner after glue coating;
placing the unexpanded honeycomb plate in a drying oven, placing a weight, bonding for 10 min at 90°C, and cutting off the edge with excessive glue after bonding. The orientation of the wood fibers was vertical to the height direction of the honeycomb;
penetrating a contact pin through the ear bands and then fixing on a expander, then slowly expanding to reach the length of 700 mm, uniformly filling the prepared epoxy resin into honeycomb cells, starting a return and extrusion device on the expander, controlling the extrusion force and repeating the expanding and extrusion actions for three times to uniformly distribute the quantitative epoxy resin on the honeycomb hole walls, and then expanding the honeycomb cells to a state meeting the regular hexagon requirement;
integrally placing the honeycomb and the frame into the drying oven for curing at 80°C for 60 min; and
trimming the prepared wood honeycomb to finish the preparation. The side length of each cell of the wood honeycomb was 5.5 mm, the size was 1200x2200x300 mm, and the density was 64 kg/m³.

### Example 22

A preparation method for a wood honeycomb specifically included the following steps:
preparing PA glue as adhesive, coating the adhesive on unidirectional wood fiber paper with areal density of 66 g/m² prepared in the Example 10 by a double-roll transfer printing method, and preparing adhering ear bands of an unexpanded honeycomb plate in a staggered stacking manner after glue coating;
placing the unexpanded honeycomb plate in a drying oven, placing a weight, bonding for 10 min at 120°C, and cutting off the edge with excessive glue after bonding. The orientation of the wood fibers was vertical to the height direction of the honeycomb;
penetrating a contact pin through the ear bands and then fixing on a expander, then slowly expanding to reach the length of 700 mm, uniformly filling the prepared epoxy resin into honeycomb cells, starting a return and extrusion device on the expander, controlling the extrusion force and repeating the expanding and extrusion actions for three times to uniformly distribute the quantitative epoxy resin on the honeycomb hole walls, and then expanding the honeycomb cells to a state meeting the regular hexagon requirement;
integrally placing the honeycomb and the frame into the drying oven for curing at 80°C for 60 min; and
trimming the prepared wood honeycomb to finish the preparation. The side length of each cell of the wood honeycomb was 5.5 mm, the size was 1220x2440x500 mm, and the density was 72 kg/m³.

### Example 23

A preparation method for a wood honeycomb specifically included the following steps:
preparing PO glue as adhesive, coating the adhesive on unidirectional wood fiber paper with areal density of 66 g/m² prepared in the Example 10 by a double-roll transfer printing method, and preparing adhering ear bands of an unexpanded honeycomb plate in a staggered stacking manner after glue coating;
placing the unexpanded honeycomb plate in a drying oven, placing a weight, bonding for 10 min at 80°C, and cutting off the edge with excessive glue after bonding. The orientation of the wood fibers was vertical to the height direction of the honeycomb;
penetrating a contact pin through the ear bands and then fixing on a expander, then slowly expanding to reach the length of 700 mm, uniformly filling the prepared epoxy resin into honeycomb cells, starting a return and extrusion device on the expander, controlling the extrusion force and repeating the expanding and extrusion actions twice to uniformly distribute the quantitative epoxy resin on the honeycomb hole walls, and then expanding the honeycomb cells to a state meeting the regular hexagon requirement;
integrally placing the honeycomb and the frame into the drying oven for curing at 80°C for 120 min; and
trimming the prepared wood honeycomb to finish the preparation. The side length of each cell of the wood honeycomb was 5.5 mm, the size was 1300x2600x400 mm, and the density was 128 kg/m³.

### Example 24

A preparation method for a wood honeycomb specifically included the following steps:
preparing epoxy glue as adhesive, coating the adhesive on unidirectional wood fiber paper with areal density of 66 g/m² prepared in the Example 10 by a silk screen printing method, and preparing adhering ear bands of an unexpanded honeycomb plate in a staggered stacking manner after glue coating;
placing the unexpanded honeycomb plate in a drying oven, placing a weight, bonding for 120 min at 80°C, and cutting off the edge with excessive glue after bonding. The orientation of the wood fibers was vertical to the height direction of the honeycomb;
penetrating a contact pin through the ear bands and then fixing on a expander, then slowly expanding to reach the length of 400 mm, uniformly filling the prepared epoxy resin into honeycomb cells, starting a return and extrusion device on the expander, controlling the extrusion force and repeating the expanding and extrusion actions twice to uniformly distribute the quantitative epoxy resin on the honeycomb hole walls, and then expanding the honeycomb cells to a state meeting the regular hexagon requirement;
integrally placing the honeycomb and the frame into the drying oven for curing at 60°C for 30 min, and then curing at 80°C for 30 min; and
trimming the prepared wood honeycomb to finish the preparation. The side length of each cell of the wood honeycomb was 4 mm, the size was1000x2000x300 mm, and the density was 64 kg/m³.

### Example 25

A preparation method for a wood honeycomb specifically included the following steps:
preparing epoxy glue as adhesive, coating the adhesive on wood fiber paper composite (areal density of 68 g/m²) prepared in the Example 11 by a silk screen printing method, and preparing adhering ear bands of an unexpanded honeycomb plate in a staggered stacking manner after glue coating;
placing the unexpanded honeycomb plate in a drying oven, placing a weight, bonding for 120 min at 80°C, and cutting off the edge with excessive glue after bonding. The orientation of the wood fibers was vertical to the height direction of the honeycomb;
penetrating a contact pin through the ear bands and then fixing on a expander, then slowly expanding to reach the length of 300 mm, uniformly filling the prepared epoxy resin into honeycomb cells, starting a return and extrusion device on the expander, controlling the extrusion force and repeating the expanding and extrusion actions for three times to uniformly distribute the quantitative epoxy resin on the honeycomb hole walls, and then expanding the honeycomb cells to a state meeting the regular hexagon requirement;
integrally placing the honeycomb and the frame into the drying oven for curing at 60°C for 30 min, and then curing at 80°C for 30 min; and
trimming the prepared wood honeycomb to finish the preparation. The side length of each cell of the wood honeycomb was 4 mm, the size was 500x500x300 mm, and the density was 48 kg/m³.

### Example 26

A preparation method for a wood honeycomb specifically included the following steps:
preparing epoxy glue as adhesive, coating the adhesive on wood fiber paper composite (areal density of 68 g/m²) prepared in the Example 11 by a silk screen printing method, and preparing adhering ear bands of an unexpanded honeycomb plate in a staggered stacking manner after glue coating;
placing the unexpanded honeycomb plate in a drying oven, placing a weight, bonding for 150 min at 80°C, and cutting off the edge with excessive glue after bonding. The orientation of the wood fibers was vertical to the height direction of the honeycomb;
penetrating a contact pin through the ear bands and then fixing on a expander, then slowly expanding to reach the length of 600 mm, uniformly filling the prepared epoxy resin into honeycomb cells, starting a return and extrusion device on the expander, controlling the extrusion force and repeating the expanding and extrusion actions for three times to uniformly distribute the quantitative epoxy resin on the honeycomb hole walls, and then expanding the honeycomb cells to a state meeting the regular hexagon requirement;
integrally placing the honeycomb and the frame into the drying oven for curing at 60°C for 30 min, and then curing at 80°C for 30 min; and
trimming the prepared wood honeycomb to finish the preparation. The side length of each cell of the wood honeycomb was 4 mm, the size was 1000x1000x300 mm, and the density was 80 kg/m³.

### Example 27

A preparation method for a wood honeycomb specifically included the following steps:
preparing epoxy glue as adhesive, coating the adhesive on wood fiber paper composite (areal density of 80 g/m²) prepared in the Example 12 by a silk screen printing method, and preparing adhering ear bands of an unexpanded honeycomb plate in a staggered stacking manner after glue coating;
placing the unexpanded honeycomb plate in a drying oven, placing a weight, bonding for 180 min at 80°C, and cutting off the edge with excessive glue after bonding. The orientation of the wood fibers was vertical to the height direction of the honeycomb;
penetrating a contact pin through the ear bands and then fixing on a expander, then slowly expanding to reach the length of 400 mm, uniformly filling the prepared epoxy resin into honeycomb cells, starting a return and extrusion device on the expander, controlling the extrusion force and repeating the expanding and extrusion actions for twice to uniformly distribute the quantitative epoxy resin on the honeycomb hole walls, and then expanding the honeycomb cells to a state meeting the regular hexagon requirement;
integrally placing the honeycomb and the frame into the drying oven for curing at 60°C for 30 min, and then curing at 80°C for 30 min; and
trimming the prepared wood honeycomb to finish the preparation. The side length of each cell of the wood honeycomb was 4 mm, the size was 1200x1200x600 mm, and the density was 64 kg/m³.

### Example 28

A preparation method for a wood honeycomb specifically included the following steps:
preparing acrylic resin as adhesive, coating the adhesive on wood fiber paper composite (areal density of 115 g/m²) prepared in the Example 13 by a flat sheet transfer printing method, and preparing adhering ear bands of an unexpanded honeycomb plate in a staggered stacking manner after glue coating;
placing the unexpanded honeycomb plate in a drying oven, placing a weight, bonding for 20 min at 60°C, and cutting off the edge with excessive glue after bonding. The orientation of the wood fibers was vertical to the height direction of the honeycomb;
penetrating a contact pin through the ear bands and then fixing on a expander, then slowly expanding to reach the length of 200 mm, uniformly filling the prepared epoxy resin into honeycomb cells, starting a return and extrusion device on the expander, controlling the extrusion force and repeating the expanding and extrusion actions for three times to uniformly distribute the quantitative epoxy resin on the honeycomb hole walls, and then expanding the honeycomb cells to a state meeting the regular hexagon requirement;
integrally placing the honeycomb and the frame into the drying oven for curing at 60°C for 30 min, and then curing at 80°C for 30 min; and
trimming the prepared wood honeycomb to finish the preparation. The side length of each cell of the wood honeycomb was 5.5 mm, the size was 500x500x400 mm, and the density was 72 kg/m³.

### Example 29

A preparation method for a wood honeycomb specifically included the following steps:
preparing epoxy glue as adhesive, coating the adhesive on wood fiber paper composite (areal density of 78 g/m²) prepared in the Example 14 by a silk screen printing method, in which, the wood fiber paper composite was combined with a carbon fiber mat as a film covering surface layer; and preparing adhering ear bands of an unexpanded honeycomb plate in a staggered stacking manner after glue coating;
placing the unexpanded honeycomb plate in a drying oven, placing a weight, bonding for 120 min at 80°C, and cutting off the edge with excessive glue after bonding. The orientation of the wood fibers was vertical to the height direction of the honeycomb;
penetrating a contact pin through the ear bands and then fixing on a expander, then slowly expanding to reach the length of 600 mm, uniformly filling the prepared epoxy resin into honeycomb cells, starting a return and extrusion device on the expander, controlling the extrusion force and repeating the expanding and extrusion actions twice to uniformly distribute the quantitative epoxy resin on the honeycomb hole walls, and then expanding the honeycomb cells to a state meeting the regular hexagon requirement;
integrally placing the honeycomb and the frame into the drying oven for curing at 60°C for 30 min, and then curing at 80°C for 30 min; and
trimming the prepared wood honeycomb to finish the preparation. The side length of each cell of the wood honeycomb was 4 mm, the size was 1200x2000x800 mm, and the density was 64 kg/m³.

### Example 30

A preparation method for a wood honeycomb specifically included the following steps:
preparing epoxy glue as adhesive, coating the adhesive on wood fiber paper composite (areal density of 78 g/m²) prepared in the Example 14 by a silk screen printing method, in which, the wood fiber paper composite was combined with a carbon fiber mat as a film covering surface layer; and preparing adhering ear bands of an unexpanded honeycomb plate in a staggered stacking manner after glue coating;
placing the unexpanded honeycomb plate in a drying oven, placing a weight, bonding for 90 min at 80°C, and cutting off the edge with excessive glue after bonding. The orientation of the wood fibers was vertical to the height direction of the honeycomb;
penetrating a contact pin through the ear bands and then fixing on a expander, then slowly expanding to reach the length of 300 mm, uniformly filling the prepared epoxy resin into honeycomb cells, starting a return and extrusion device on the expander, controlling the extrusion force and repeating the expanding and extrusion actions twice to uniformly distribute the quantitative epoxy resin on the honeycomb hole walls, and then expanding the honeycomb cells to a state meeting the regular hexagon requirement;
integrally placing the honeycomb and the frame into the drying oven for curing at 60°C for 30 min, and then curing at 80°C for 30 min; and
trimming the prepared wood honeycomb to finish the preparation. The side length of each cell of the wood honeycomb was 4 mm, the size was 500x500x600 mm, and the density was 72 kg/m³.

### Example 31

A preparation method for a wood honeycomb specifically included the following steps:
preparing epoxy glue as adhesive, coating the adhesive on wood fiber paper composite (areal density of 78 g/m²) prepared in the Example 14 by a silk screen printing method, in which, the wood fiber paper composite was combined with a carbon fiber mat as a film covering surface layer; and preparing adhering ear bands of an unexpanded honeycomb plate in a staggered stacking manner after glue coating;
placing the unexpanded honeycomb plate in a drying oven, placing a weight, bonding for 80 min at 80°C, and cutting off the edge with excessive glue after bonding. The orientation of the wood fibers was vertical to the height direction of the honeycomb;
penetrating a contact pin through the ear bands and then fixing on a expander, then slowly expanding to reach the length of 300 mm, uniformly filling the prepared epoxy resin into honeycomb cells, starting a return and extrusion device on the expander, controlling the extrusion force and repeating the expanding and extrusion actions twice to uniformly distribute the quantitative epoxy resin on the honeycomb hole walls, and then expanding the honeycomb cells to a state meeting the regular hexagon requirement;
integrally placing the honeycomb and the frame into the drying oven for curing at 60°C for 30 min, and then curing at 80°C for 30 min; and
trimming the prepared wood honeycomb to finish the preparation. The side length of each cell of the wood honeycomb was 4 mm, the size was 500x500x500 mm, and the density was 80 kg/m³.

### Example 32

A preparation method for a wood honeycomb specifically included the following steps:
preparing epoxy glue as adhesive, coating the adhesive on wood fiber paper composite (areal density of 84 g/m²) prepared in the Example 15 by a silk screen printing method, in which, the wood fiber paper composite was combined with a glass fiber mat as a film covering surface layer; and preparing adhering ear bands of an unexpanded honeycomb plate in a staggered stacking manner after glue coating;
placing the unexpanded honeycomb plate in a drying oven, placing a weight, bonding for 120 min at 80°C, and cutting off the edge with excessive glue after bonding. The orientation of the wood fibers was vertical to the height direction of the honeycomb;
penetrating a contact pin through the ear bands and then fixing on a expander, then slowly expanding to reach the length of 400 mm, uniformly filling the prepared epoxy resin into honeycomb cells, starting a return and extrusion device on the expander, controlling the extrusion force and repeating the expanding and extrusion actions twice to uniformly distribute the quantitative epoxy resin on the honeycomb hole walls, and then expanding the honeycomb cells to a state meeting the regular hexagon requirement;
integrally placing the honeycomb and the frame into the drying oven for curing at 60°C for 30 min, and then curing at 80°C for 30 min; and
trimming the prepared wood honeycomb to finish the preparation. The side length of each cell of the wood honeycomb was 4 mm, the size was 600x600x600 mm, and the density was 64 kg/m³.

### Example 33

A preparation method for a wood honeycomb specifically included the following steps:
preparing epoxy glue as adhesive, coating the adhesive on wood fiber paper composite (areal density of 78 g/m²) prepared in the Example 14 by a silk screen printing method, in which, the wood fiber paper composite was combined with a carbon fiber mat as a film covering surface layer; and preparing adhering ear bands of an unexpanded honeycomb plate in a staggered stacking manner after glue coating;
placing the unexpanded honeycomb plate in a drying oven, placing a weight, bonding for 120 min at 80°C, and cutting off the edge with excessive glue after bonding. The orientation of the wood fibers was vertical to the height direction of the honeycomb;
penetrating a contact pin through the ear bands and then fixing on a expander, then slowly expanding to reach the length of 600 mm, uniformly filling the prepared epoxy resin into honeycomb cells, starting a return and extrusion device on the expander, controlling the extrusion force and repeating the expanding and extrusion actions twice to uniformly distribute the quantitative epoxy resin on the honeycomb hole walls, and then expanding the honeycomb cells to a state meeting the regular hexagon requirement;
integrally placing the honeycomb and the frame into the drying oven for curing at 60°C for 30 min, and then curing at 100°C for 30 min; and
trimming the prepared wood honeycomb to finish the preparation. The side length of each cell of the wood honeycomb was 3.67 mm, the size was 1000x1000x500 mm, and the density was 64 kg/m³.

### Example 34

A preparation method for a wood honeycomb specifically included the following steps:
preparing epoxy glue as adhesive, coating the adhesive on wood fiber paper composite (areal density of 84 g/m²) prepared in the Example 15 by a silk screen printing method, in which, the wood fiber paper composite was combined with a glass fiber mat as a film covering surface layer; and preparing adhering ear bands of an unexpanded honeycomb plate in a staggered stacking manner after glue coating;
placing the unexpanded honeycomb plate in a drying oven, placing a weight, bonding for 120 min at 80°C, and cutting off the edge with excessive glue after bonding. The orientation of the wood fibers was vertical to the height direction of the honeycomb;
penetrating a contact pin through the ear bands and then fixing on a expander, then slowly expanding to reach the length of 1200 mm, uniformly filling the prepared phenolic resin into honeycomb cells, starting a return and extrusion device on the expander, controlling the extrusion force and repeating the expanding and extrusion actions twice to uniformly distribute the quantitative phenolic resin on the honeycomb hole walls, and then expanding the honeycomb cells to a state meeting the regular hexagon requirement;
integrally placing the honeycomb and the frame into the drying oven for curing at 60°C for 30 min, then curing at 80°C for 30 min, and finally curing at 100°C for 30 min; and
trimming the prepared wood honeycomb to finish the preparation. The side length of each cell of the wood honeycomb was 3.67 mm, the size was 1200x2400x500 mm, and the density was 72 kg/m³.

### Example 35

A preparation method for a wood honeycomb specifically included the following steps:
preparing epoxy glue as adhesive, coating the adhesive on wood fiber paper composite (areal density of 68 g/m²) prepared in the Example 11 by a silk screen printing method, and preparing adhering ear bands of an unexpanded honeycomb plate in a staggered stacking manner after glue coating;
placing the unexpanded honeycomb plate in a drying oven, placing a weight, bonding for 120 min at 80°C, and cutting off the edge with excessive glue after bonding. The orientation of the wood fibers was vertical to the height direction of the honeycomb;
penetrating a contact pin through the ear bands and then fixing on a expander, then slowly expanding to reach the length of 300 mm, uniformly filling the prepared phenolic resin into honeycomb cells, starting a return and extrusion device on the expander, controlling the extrusion force and repeating the expanding and extrusion actions twice to uniformly distribute the quantitative phenolic resin on the honeycomb hole walls, and then expanding the honeycomb cells to a state meeting the regular hexagon requirement;
integrally placing the honeycomb and the frame into the drying oven for curing at 60°C for 30 min, then curing at 80°C for 30 min, and finally curing at 100°C for 30 min; and
trimming the prepared wood honeycomb to finish the preparation. The side length of each cell of the wood honeycomb was 2.75 mm, the size was 500x500x400 mm, and the density was 48 kg/m³.

### Example 36

A preparation method for a wood honeycomb specifically included the following steps:
preparing epoxy glue as adhesive, coating the adhesive on wood fiber paper composite with areal density of 78 g/m² by a silk screen printing method, in which, the wood fiber paper composite was combined with a carbon fiber mat as a film covering surface layer; and preparing adhering ear bands of an unexpanded honeycomb plate in a staggered stacking manner after glue coating;
placing the unexpanded honeycomb plate in a drying oven, placing a weight, bonding for 120 min at 80°C, and cutting off the edge with excessive glue after bonding. The orientation of the wood fibers was vertical to the height direction of the honeycomb;
penetrating a contact pin through the ear bands and then fixing on a expander, then slowly expanding to reach the length of 500 mm, uniformly filling the prepared phenolic resin into honeycomb cells, starting a return and extrusion device on the expander, controlling the extrusion force and repeating the expanding and extrusion actions twice to uniformly distribute the quantitative phenolic resin on the honeycomb hole walls, and then expanding the honeycomb cells to a state meeting the regular hexagon requirement;
integrally placing the honeycomb and the frame into the drying oven for curing at 60°C for 30 min, then curing at 80°C for 30 min, and finally curing at 100°C for 30 min; and
trimming the prepared wood honeycomb to finish the preparation. The side length of each cell of the wood honeycomb was 2.75 mm, the size was 1000x1000x800 mm, and the density was 64 kg/m³.

The wood honeycomb prepared in the above examples was sliced to reach thickness of 15 mm, and subjected to compressive strength test.

The compressive strength of the wood honeycomb (GB/T 12914-2008) prepared by the method in the examples is shown in Table 8 below.

**Table 8: Wood honeycomb compression performance in corresponding examples**

| Glue coating and fiber direction | Example | Type of honeycomb | Compressive strength (MPa) GB/T 1453-2005 | Resin B | Resin C | Paper areal density |
|---|---|---|---|---|---|---|
| Vertical to height direction | 16 | 5.5-56 | 0.802 | PO hot melt adhesive | Epoxy resin | |
| | 17 | 5.5-128 | 1.9 | PO hot melt adhesive | Epoxy resin | |
| Parallel to height direction | 18 | 5.5-48 | 1.085 | PO hot melt adhesive | Polyester resin | |
| | 19 | 5.5-56 | 1.50 | PO hot melt adhesive | Epoxy resin | Wood fiber paper 66 g/m² |
| | 20 | 5.5-64 | 1.612 | PO hot melt adhesive | Acrylic resin | |
| | 21 | 5.5-64 | 1.525 | PO hot melt adhesive | Epoxy resin | |
| | 22 | 5.5-72 | 1.971 | PA hot melt adhesive | Epoxy resin | |
| | 23 | 5.5-128 | 3.275 | PO hot melt adhesive | Epoxy resin | |
| | 24 | 4.0-64 | 1.566 | Epoxy structural adhesive | Epoxy resin | |
| | 25 | 4.0-48 | 1.308 | Epoxy structural adhesive | Epoxy resin | Composite wood paper (PU added) 68 g/m² |
| | 26 | 4.0-80 | 2.174 | Epoxy structural adhesive | Epoxy resin | Composite wood paper (PU added) 68 g/m² |
| | 27 | 4.0-64 | 2.134 | Epoxy structural adhesive | Epoxy resin | Composite wood paper (PU added) 80 g/m² |
| | 28 | 5.5-72 | 1.873 | Acrylic resin | Epoxy resin | Composite wood paper (PU added) 115 g/m² |
| | 29 | 4.0-64 | 2.942 | Epoxy structural adhesive | Epoxy resin | Composite wood paper (PU added + Carbon fiber mats on two surfaces) 78 g/m² |
| | 30 | 4.0-72 | 3.537 | Epoxy structural adhesive | Epoxy resin | Composite wood paper (PU added + Carbon fiber mats on two surfaces) 78 g/m² |
| | 31 | 4.0-80 | 4.112 | Epoxy structural adhesive | Epoxy resin | Composite wood paper (PU added + Carbon fiber mats on two surfaces) 78 g/m² |
| | 32 | 4.0-64 | 2.582 | Epoxy structural adhesive | Epoxy resin | Composite wood paper (PU added + Carbon fiber mats on two surfaces) 84 g/m² |
| | 33 | 3.67-64 | 2.341 | Epoxy structural adhesive | Phenolic resin | Composite wood paper (PU added + Carbon fiber mats on two surfaces) 78 g/m² |
| | 34 | 3.67-72 | 3.425 | Epoxy structural adhesive | Phenolic resin | Composite wood paper (PU added + Carbon fiber mats on two surfaces) 84 g/m² |
| | 35 | 2.75-48 | 1.514 | Epoxy structural adhesive | Phenolic resin | Composite wood paper (PU added) 68 g/m² |
| | 36 | 2.75-64 | 2.478 | Epoxy structural adhesive | Phenolic resin | Composite wood paper (PU added + Carbon fiber mats on two surfaces) 78 g/m² |

The above-mentioned specific embodiments are further described in detail the purpose, technical solution and beneficial effects of the present invention, and it is to be understood that the above are only specific embodiments of the present invention and are not used for limiting the present invention, and any modifications, equivalent replacements, improvements, etc., made within the spirit and principles of the present invention shall be included in the scope of protection of the present invention.

## Claims

1. A wood honeycomb, comprising a plain honeycomb and first resin combined with a surface of the plain honeycomb, wherein the plain honeycomb comprises a plurality of pieces of wood fiber paper and adhesive; the plurality of pieces of wood fiber paper are bonded by the adhesive;
the plurality of pieces of wood fiber paper composite comprise unidirectional wood fiber paper and/or wood fiber paper composite; the wood fiber paper composite comprises unidirectional wood fiber paper, and a second resin layer and/or a fiber reinforced layer combined with the surface of the unidirectional wood fiber paper;
the density of the wood honeycomb is 29-144 kg/m³; and
the compressive strength of the wood honeycomb is 0.4-13.8 MPa.

2. The wood honeycomb according to claim 1, wherein the wood fiber paper comprises wood fibers and/or fiber bundles; the wood fibers and/or fiber bundles are integrally arranged or extended in a single direction in a microscopic aspect.

3. The wood honeycomb according to claim 2, wherein the tensile strength of the wood fiber paper in a direction parallel to the wood fibers and/or fiber bundles is 6-30 kN/m;
and/or, the tensile strength of the wood fiber paper in a direction vertical to the wood fibers and/or fiber bundles is 0.3-4 kN/m
and/or, the elasticity modulus of wood fiber paper in the direction parallel to wood fibers and/or fiber bundles is 8-80 GPa;
and/or, the elasticity modulus of the wood fiber paper in the direction vertical to the wood fibers and/or fiber bundles is 0.4-3 GPa.

4. The wood honeycomb according to claim 1, wherein the unidirectional wood fiber paper is prepared by shrinkage of a unidirectional wood veneer with partial substances removed in at least one direction;
the partial substances comprise lignin and hemicellulose; and
the shrinkage comprises transverse shrinkage and thickness shrinkage according to force decomposition.

5. The wood honeycomb according to claim 4, wherein the unidirectional veneer with partial substances removed is subjected to shrinkage in at least two directions;
the shrinkage comprises transverse shrinkage and thickness shrinkage;
the shrinkage directions of the transverse shrinkage and thickness shrinkage are crossed;
the shrinkage force of transverse shrinkage is the force in the direction horizontal to the unidirectional veneer, and the force in a direction intersected with the extending direction of the wood fibers and/or fiber bundles in the plane; and/or, the shrinkage force of thickness shrinkage is the force in the direction vertical to the unidirectional veneer; and
the force in the horizontal direction and the force in the vertical direction are original applied forces independently from each other, and/or, forces produced by a force after decomposed or forces after composed.

6. The wood honeycomb according to claim 5, wherein the thickness of the unidirectional wood fiber paper is less than or equal to 0.2 mm;
and/or, the areal density of the unidirectional wood fiber paper is 20-200 g/m²;
and/or, the tensile strength of unidirectional wood fiber paper in the direction parallel to the wood fibers and/or fiber bundles is 150-1000 MPa.

7. The wood honeycomb according to claim 4, wherein the apparent thickness of the unidirectional wood fiber paper under the pressure not greater than 0.005 MPa does not exceed 4 times of the average thickness of the unidirectional wood fiber paper;
and/or, the weight loss of the unidirectional veneer with partial substances removed is 10%-60% relative to the unidirectional veneer;
and/or, the percentage of shrinkage of transverse shrinkage is 2%-40%; and the percentage of shrinkage of thickness shrinkage is 20%-90%.

8. The wood honeycomb according to claim 1, wherein the mass of the second resin layer is 0%-30% of that of the wood fiber paper composite; and the mass of the fiber reinforced layer is 0%-10% of that of the wood fiber paper composite.

9. The wood honeycomb according to claim 8, wherein the second resin layer comprises thermosetting resin and/or thermoplastic resin;
and/or, the areal density of the fiber reinforced layer is 1-20 g/m².

10. The wood honeycomb according to claim 9, wherein the thermosetting resin can be selected from one or more of epoxy resin, unsaturated polyester, polybutadiene resin, phenolic resin, melamine resin and crosslinkable polyurethane;
and/or, the thermoplastic resin can be selected from one or more of polyamide, polylactic acid, polyurethane, ethylene-vinyl acetate copolymer, ethylene-acrylate copolymer and copolyester;
and/or, the fiber reinforced layer is selected from fiber surface mat with low areal density; and the fiber surface mat with low areal density is selected from one or more of a carbon fiber surface mat, a glass fiber surface mat and an aramid fiber surface mat..

11. The wood honeycomb according to claim 1, wherein the areal density of the wood fiber paper composite is increased by 3-50 g/m² compared with that of the unidirectional wood fiber paper.

12. The wood honeycomb according to claim 1, wherein the mass of the wood fiber paper is 30%-84% of that of the wood honeycomb;
and/or, the mass of the first resin is 15%-69% of that of the wood honeycomb
and/or, the mass of the adhesive is 1%-30% of that of the wood honeycomb

13. A preparation method for a wood honeycomb, comprising the following steps:
S1) coating a plurality of pieces of wood fiber paper with adhesive, then carrying out staggered stacking, and carrying out hot-pressing and curing to obtain an unexpanded honeycomb core block;
S2) expanding the unexpanded honeycomb core block to obtain a plain honeycomb; and
S3) transferring first resin to the plain honeycomb, and carrying out curing to obtain the wood honeycomb;
the plurality of pieces of wood fiber paper comprise unidirectional wood fiber paper and/or wood fiber paper composite; and the wood fiber paper composite comprises the unidirectional wood fiber paper, and a second resin layer and/or a fiber reinforced layer which are combined with the surface of the unidirectional wood fiber paper;
the density of the wood honeycomb is 29-144 kg/m³; and
the compressive strength of the wood honeycomb is 0.4-13.8 MPa.

14. The preparation method according to claim 13, wherein a preparation method for the unidirectional wood fiber paper comprises the following steps:
A1) carrying out chemical modification on a unidirectional veneer to obtain a unidirectional veneer with partial substances removed; and
A2) carrying out shrinkage treatment on the unidirectional veneer with partial substances removed in at least one direction to obtain the unidirectional wood fiber paper; and
decomposition of the shrinkage force comprises transverse shrinkage and thickness shrinkage.

15. The preparation method according to claim 14, wherein the thickness of the unidirectional veneer is 0.05-0.6 mm;
and/or, the chemical modification in A1) is performed in a closed high-pressure system; the target temperature of chemical modification is 100-150°C; the target pressure of chemical modification is 0.07-1.9 MPa; the chemical modification is maintained in the target temperature/target pressure for 1-12 h;
and/or, the chemical modification is performed under normal pressure; the chemical modification is maintained in the target temperature/target pressure for 24-72 h; the temperature of chemical modification is the temperature at which water boils without elevated pressures;
and/or, in step A1), a modification solution for chemical modification comprises an alkaline substance, a sulfonating agent and water;
the pH of the modification solution is 12-14;
the concentration of alkaline substance in the modification solution is 0.01-5 kg/L;
the alkaline substance is selected from one or more of sodium hydroxide, potassium hydroxide, sodium bicarbonate and potassium bicarbonate;
the concentration of the sulfonating agent in the modification solution is 0.01-5 kg/L;
the sulfonating agent in the modification solution is selected from one or more of sulfite, chlorosulfonic acid, hydroxymethylsulfonate, sulfuryl chloride and sulfamic acid;
and/or, the material ratio of the unidirectional veneer to the modification solution for chemical modification is 4.6-184 cm³:1 L.

16. The preparation method according to claim 14, wherein the shrinkage treatment comprises the transverse shrinkage treatment and the thickness shrinkage treatment; and the force of the transverse shrinkage treatment is crossed to the force of the thickness shrinkage treatment.

17. The preparation method according to claim 16, wherein the transverse shrinkage treatment comprises: applying an external mechanical force in the transverse direction and/or performing dehydration spontaneous shrinkage; and
the external mechanical force applied in the transverse direction is in the direction intersected with the extending direction of the wood fibers and/or fiber bundles of the unidirectional veneer with partial substances removed in the plane.

18. The preparation method according to claim 17, wherein applying the external mechanical force in the transverse direction is specifically that a film material that can perform transverse shrinkage is used and attached to the surface of unidirectional veneer with partial substances removed, and pressure is applied;
and/or, negative pressure is transversely applied to the unidirectional veneer with partial substances removed;
and/or, roller rubbing treatment is performed on the unidirectional veneer with partial substances removed;
and/or, pressure is transversely applied to the unidirectional veneer with partial substances removed.

19. The preparation method according to claim 17, wherein pressure for applying the external mechanical force in the transverse direction is preferably 0.001-1.5 MPa;
and/or, the temperature of transverse shrinkage treatment is 15°C-150°C;
and/or, the time of transverse shrinkage treatment is 1 s to 4 min;
and/or, the intensity of the negative pressure is smaller than or equal to one atmospheric pressure.

20. The preparation method according to claim 16, wherein the thickness shrinkage treatment is to apply a mechanical pressure in the thickness direction;
the pressure for applying the mechanical pressure in thickness direction is 0.01-80 MPa;
and/or, the time of the thickness shrinkage treatment is 0.1-4 min;
and/or, the temperature of the thickness shrinkage treatment is 15°C-150°C.

21. The preparation method according to claim 16, wherein the thickness shrinkage is performed on a single or stacked veneers; 2-20 veneers are stacked; and
the pressure of thickness shrinkage treatment in a stacking condition is 0.1-60 MPa.

22. The preparation method according to claim 14, wherein the percentage of shrinkage of transverse shrinkage is 2%-40%; and
the percentage of shrinkage of thickness shrinkage is 20%-90%.

23. The preparation method according to claim 16, wherein the thickness shrinkage comprises hot-pressing treatment under a negative pressure condition;
the pressure of hot-pressing treatment is 0.1-60 MPa;
and/or, the temperature of hot-pressing treatment is 50°C-150°C;
and/or, the time of the hot-pressing treatment is 0.5-20 min.

24. The preparation method according to claim 16, wherein levelling treatment is carried out after shrinkage treatment; and
the levelling treatment is to perform planar hot pressing in a negative pressure air exhaust environment.

25. The preparation method according to claim 24, wherein exhaust channels are arranged on two contact surfaces or a single contact surface of the unidirectional wood fiber paper during levelling treatment.

26. The preparation method according to claim 24, wherein the pressure of the planar hot pressing is 0.01-2 MPa;
and/or, the time of the levelling treatment is 0.1-4 min;
and/or, the temperature of levelling treatment is 40°C-150°C.

27. The preparation method according to claim 24, wherein the levelling treatment is selected is selected from one or more of vacuum thermoforming or negative-pressure hot-pressing treatment;
and/or, the water content of the unidirectional wood fiber paper is less than or equal to 10%.

28. The preparation method according to claim 13, wherein the wood fiber paper composite comprises the unidirectional wood fiber paper and the second resin layer combined with the surface of the unidirectional wood fiber paper; the preparation method for the wood fiber paper composite comprises:
transferring a diluted second resin feedstock to the surface of the unidirectional wood fiber paper, and curing to obtain the wood fiber paper composite; and
the second resin feedstock is selected from one or more of a precursor of the second resin, a monomer of second resin, and the second resin.

29. The preparation method according to claim 13, wherein the wood fiber paper composite comprises the unidirectional wood fiber paper, the second resin layer and the fiber reinforced layer which are combined with the surface of the unidirectional wood fiber paper; the preparation method for the wood fiber paper composite comprises:
transferring the diluted second resin feedstock to the surface of the unidirectional wood fiber paper, covering with a film by the fiber reinforced layer, and curing to obtain the wood fiber paper composite; and
the second resin feedstock is selected from one or more of a precursor of the second resin, a monomer of second resin, and the second resin.

30. The preparation method according to claim 13, wherein in step S3), the first resin is transferred to a plain honeycomb for multiple times and cured for multiple times so as to form the wood honeycomb; the multiple times of curing are performed between two times of resin transferring, and the last step is curing; the transferring method is selected from one or more of dip coating, shower coating and spray coating.

31. The preparation method according to claim 13, wherein step S3) of transferring the resin to the plain honeycomb specifically comprises the following steps:
spray-coating, shower-coating or dip-coating the first resin in honeycomb through holes of the plain honeycomb, and then uniformly coating the first resin on the plain honeycomb after expanding and pressing the honeycomb.

32. A wood fiber paper composite, comprising unidirectional wood fiber paper, and a second resin layer and/or a fiber reinforced layer combined with at least one surface of the unidirectional wood fiber paper;
the tensile strength of the wood fiber paper composite in a direction vertical to wood fibers and/or fiber bundles is improved by 5%-100% compared with that of the unidirectional wood fiber paper; and
the elasticity modulus of the wood fiber paper composite in the direction vertical to the wood fibers is improved by 5%-100% compared with that of the unidirectional wood fiber paper.

33. The wood fiber paper composite according to claim 32, wherein the unidirectional wood fiber paper is prepared by shrinkage of a unidirectional wood veneer with partial substances removed in at least one direction;
the partial substances comprise lignin and hemicellulose;
the shrinkage comprises transverse shrinkage and thickness shrinkage according to force decomposition;
the unidirectional wood fiber paper comprises wood fibers and/or fiber bundles; the wood fibers and/or fiber bundles are integrally arranged or extended in a single direction in a microscopic aspect;
the tensile strength of the wood fiber paper composite in the direction parallel to the wood fibers and/or fiber bundles is 6-30 kN/m;
and/or, the tensile strength of the wood fiber paper composite in the direction vertical to the wood fibers and/or fiber bundles is 0.7-4 kN/m;
and/or, the elasticity modulus of the wood fiber paper composite in the direction parallel to the wood fibers and/or fiber bundles is 8-80 GPa;
and/or, the elasticity modulus of the wood fiber paper composite in the direction vertical to the wood fibers is 0.8-3 GPa.

34. The wood fiber paper composite according to claim 32, wherein the mass of the second resin layer is 0%-30% of that of the wood fiber paper composite; and the mass of the fiber reinforced layer is 0%-10% of that of the wood fiber paper composite, and the two are not zero at the same time.

35. The wood fiber paper composite according to claim 32, wherein the second resin layer comprises thermosetting resin and/or thermoplastic resin; the thermosetting resin is selected from one or more of epoxy resin, unsaturated polyester, polybutadiene resin, phenolic resin, melamine resin and crosslinkable polyurethane; and the thermoplastic resin is selected from one or more of polyamide, polylactic acid, polyurethane, ethylene-vinyl acetate copolymer, ethylene-acrylate copolymer and copolyester;
the fiber reinforced layer is selected from a low-density fiber surface mat; and the low-density fiber surface mat is selected from one or more of a carbon fiber surface mat, a glass fiber surface mat and an aramid fiber surface mat.

36. The wood fiber paper composite according to claim 32, wherein the areal density of the wood fiber paper composite is increased by 3-50 g/m² compared with that of the unidirectional wood fiber paper.

37. Use of the wood honeycomb according to any one of claims 1 to 12, the wood honeycomb prepared by the preparation method according to any one of claims 13 to 31, the wood fiber paper composite according to any one of claims 32 to 36 in preparing one or more of building materials, furniture materials, sports equipment, static carriers, vehicles and aircrafts.
